(19) **Europäisches Patentamt European Patent Office Office européen des brevets**

(11) **EP 4 459 319 A1**

(12) **EUROPEAN PATENT APPLICATION**
published in accordance with Art. 153(4) EPC

(43) Date of publication:
06.11.2024 Bulletin 2024/45

(21) Application number: 22913175.0

(22) Date of filing: 15.06.2022

(51) International Patent Classification (IPC):
*G01S 7/483* (2006.01)     *G01S 17/89* (2020.01)
*G01S 17/93* (2020.01)

(52) Cooperative Patent Classification (CPC):
**G01S 7/483; G01S 17/89; G01S 17/93;** Y02A 90/10

(86) International application number:
**PCT/CN2022/098784**

(87) International publication number:
**WO 2023/123886 (06.07.2023 Gazette 2023/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 28.12.2021 CN 202111630295

(71) Applicant: **Hesai Technology Co., Ltd.**
**Shanghai 201815 (CN)**

(72) Inventors:
• **ZHAO, Shensen**
  **Shanghai 201815 (CN)**
• **XIANG, Shaoqing**
  **Shanghai 201815 (CN)**

(74) Representative: **Fish & Richardson P.C.**
**Highlight Business Towers**
**Mies-van-der-Rohe-Straße 8**
**80807 München (DE)**

(54) **DETECTION METHOD OF LIDAR AND LIDAR**

(57)     A detection method for a LiDAR and a LiDAR. The LiDAR includes a plurality of light-emitter units and a plurality of calibrated detector units, the plurality of calibrated detector units being in one-to-one correspondence with the plurality of light-emitter units. The detection method includes: performing a fixed value acquisition operation to determine fixed value acquisition data, the fixed value acquisition operation including: performing acquisition, by the plurality of light-emitter units and the plurality of calibrated detector units, to determine the fixed value acquisition data; performing at least one interpolation acquisition operation to determine interpolation acquisition data; and determining a point cloud map based on the fixed value acquisition data and the interpolation acquisition data. The fixed value acquisition data is stitched with the interpolation acquisition data to expand the number of channels and improve the resolution without increasing the optical-mechanical complexity.

S110

Perform fixed value acquisition operation to determine fixed value acquisition data, fixed value acquisition operation including performing acquisition, by plurality of light-emitter units and plurality of calibrated detector units, to determine fixed value acquisition data

S120

Perform at least one interpolation acquisition operation to determine interpolation acquisition data

S130

Determine point cloud map based on fixed value acquisition data and interpolation acquisition data

**FIG. 4**

## Description

This application claims priority to Chinese Patent Application No. 202111630295.7 filed with the Chinese patent office on December 28, 2021 and titled "DETECTION METHOD FOR LIDAR AND LIDAR," the content of which is incorporated herein by reference in its entirety.

## TECHNICAL FIELD

This disclosure relates to laser detection and, in particular, to a detection method for a light detection and ranging ("LiDAR") and a LiDAR.

## BACKGROUND

A LiDAR is a typically used ranging sensor with the characteristics of long detection range, high resolution, and less environmental interference, and is widely used in the fields such as smart robots, drones, and autonomous driving. The operating principle of the LiDAR is to determine information such as the distance or speed of a target based on the time for a roundtrip of the laser between the LiDAR and the target, or the frequency shift produced by the roundtrip of the frequency-modulated continuous light between the LiDAR and the target.

In the LiDAR, the number of channels is an important indicator of the LiDAR performance. For a same vertical field of view ("VFOV"), a greater number of channels provides stronger spatial resolution capability and better imaging effects to a particular extent.

However, existing methods of increasing the number of LiDAR channels significantly increase hardware costs or increase the optical-mechanical complexity, which causes increased overall cost and degraded reliability of the LiDAR.

## SUMMARY OF THE INVENTION

The problem to be solved by this disclosure is to increase the number of LiDAR channels while controlling the costs without increasing the optical-mechanical complexity.

To solve the foregoing problem, this disclosure provides a detection method for a LiDAR. The LiDAR includes a plurality of light-emitter units and a plurality of calibrated detector units, the plurality of calibrated detector units being in one-to-one correspondence with the plurality of light-emitter units. The detection method includes:

The detection method includes: performing a fixed value acquisition operation to determine fixed value acquisition data, the fixed value acquisition operation including performing acquisition, by the plurality of light-emitter units and the plurality of calibrated detector units, to determine the fixed value acquisition data; performing at least one interpolation acquisition operation to determine interpolation acquisition data; and determining a point cloud map based on the fixed value acquisition data and the interpolation acquisition data.

Optionally, the interpolation acquisition operation includes: determining a plurality of interpolated detector units, the plurality of interpolated detector units being in one-to-one correspondence with the plurality of calibrated detector units; and performing acquisition, by the plurality of light-emitter units and the plurality of interpolated detector units, to determine the interpolation acquisition data.

Optionally, each of the calibrated detector units includes a plurality of detectors, and each of the interpolated detector units includes a plurality of detectors; and the plurality of detectors in the interpolated detector unit are partially different from the plurality of detectors in the corresponding calibrated detector unit.

Optionally, the LiDAR includes: a plurality of detectors arranged in an array to form a detector array; and along a row direction or column direction of the detector array, a distance between the interpolated detector unit and the corresponding calibrated detector unit is smaller than a distance between adjacent calibrated detector units in the corresponding direction; or, along the row direction or column direction of the detector array, the distance between the interpolated detector unit and the corresponding calibrated detector unit is smaller than the size of the calibrated detector unit in the corresponding direction.

Optionally, the step of performing at least one interpolation acquisition operation to determine interpolation acquisition data includes: performing a row-column interpolation acquisition operation to determine row-column interpolation acquisition data, the interpolation acquisition data including the row-column interpolation acquisition data; where the row-column interpolation acquisition operation includes: determining a plurality of row-column interpolated detector units, the direction in which the row-column interpolated detector units point to the corresponding calibrated detector units being parallel to one of the row direction or the column direction of the detector array; and performing acquisition, by the plurality of light-emitter units and the plurality of row-column interpolated detector units, to determine the row-column interpolation acquisition data.

Optionally, the step of performing at least one interpolation acquisition operation to determine interpolation acquisition data further includes: performing an oblique interpolation acquisition operation to determine oblique interpolation acquisition data, the interpolation acquisition data further including the oblique interpolation acquisition data; where the oblique interpolation acquisition operation includes: determining a plurality of obliquely interpolated detector units, the direction in which the obliquely interpolated detector units point to the corresponding calibrated detector unit intersecting with both the row direction and the column direction; and performing acquisition, by the plurality of light-emitter units and the plurality of obliquely interpolated detector units to determine the oblique interpolation acquisition data.

Optionally, the detectors are independently addressed and independently controlled detectors.

Optionally, in the step of performing acquisition, by the plurality of light-emitter units and the plurality of calibrated detector units, to determine fixed value acquisition data, the light-emitter units are calibrated light-emitter units; and the step of interpolation acquisition operation further includes: determining a plurality of interpolated light-emitter units based on the plurality of interpolated detector units, the plurality of interpolated light-emitter units being in one-to-one correspondence with the calibrated light-emitter units; and performing acquisition, by the plurality of interpolated light-emitter units and the plurality of interpolated detector units, to determine the interpolation acquisition data.

Optionally, each of the calibrated light-emitter units includes a plurality of emitters, and each of the interpolated light-emitter units includes a plurality of emitters; and the plurality of emitters in the interpolated light-emitter unit are partially different from the plurality of emitters in the corresponding calibrated light-emitter unit.

Optionally, the emitters are independently addressed and independently controlled emitters.

Optionally, the LiDAR further includes a scanner device configured to deflect the light generated by the light-emitter units to a detection angle by rotating or swinging; the fixed value acquisition operation further includes: before performing acquisition, by the plurality of light-emitter units and the plurality of calibrated detector units, to determine fixed value acquisition data, determining the detection angle, the fixed value acquisition data corresponding to the detection angle; and the interpolation acquisition operation further includes: before acquiring, by the plurality of light-emitter units and the plurality of interpolated detector units, to determine the interpolation acquisition data, determining the detection angle, the interpolation acquisition data corresponding to the detection angle.

Optionally, the rotation axis is parallel to one of the row direction or column direction of the detector array. The detection method includes: a fixed value scanning process, and the fixed value scanning process includes: performing a fixed value acquisition operation at an i-th detection angle; and performing a row-column interpolation acquisition operation at an i+1th detection angle, the direction in which the row-column interpolated detector unit points to the corresponding calibrated detector unit being parallel to the rotation axis in the row-column interpolation acquisition operation.

Optionally, the detection method further includes: at least one interpolation scanning process, the interpolation scanning process being located between two adjacent fixed value scanning processes; and the interpolation scanning operation includes: performing the row-column interpolation acquisition operation at the i-th detection angle, the direction in which the row-column interpolated detector unit points to the corresponding calibrated detector unit being perpendicular to the direction of the rotation axis in the row-column interpolation acquisition operation; and performing the oblique interpolation acquisition operation at the i+1th detection angle.

Optionally, the detection method includes: performing a first fixed value scanning process, a first interpolation scanning process, a second fixed value scanning process, and a second interpolation scanning process. The first fixed value scanning process includes: performing the fixed value acquisition operation at the i-th detection angle; and performing the row-column interpolation acquisition operation at the i+1th detection angle; the first interpolation scanning process includes: performing the row-column interpolation acquisition operation at the i-th detection angle; and performing the oblique interpolation acquisition operation at the i+1th detection angle; the second fixed value scanning process includes: performing the row-column interpolation acquisition operation at the i-th detection angle; and performing the fixed value acquisition operation at the i+1th detection angle; the second interpolation scanning process includes: performing the oblique interpolation acquisition operation at the i-th detection angle; and performing the row-column interpolation acquisition operation at the i+1th detection angle; and the direction in which the row-column interpolated detector unit points to the corresponding calibrated detector unit in the row-column interpolation acquisition operation performed at the i-th detection angle during the second fixed value scanning process is the same as the direction in which the row-column interpolated detector unit points to the corresponding calibrated detector unit in the row-column interpolation acquisition operation performed at the i+1th detection angle during the first fixed value scanning process; the direction in which the row-column interpolated detector unit points to the corresponding calibrated detector unit in the row-column interpolation acquisition operation performed at the i+1th detection angle during the second interpolation scanning process is the same as the direction in which the row-column interpolated detector unit points to the corresponding calibrated detector unit in the row-column interpolation acquisition operation performed at the i-th detection angle during the first interpolation scanning process; and the direction in which the obliquely interpolated detector unit points to the corresponding calibrated detector unit in the oblique interpolation acquisition operation performed at the i-th detection angle during the second interpolation scanning process is the same as the direction in which the obliquely interpolated detector unit points to the corresponding calibrated detector unit in the oblique interpolation acquisition operation performed at the i+1th detection angle during the first interpolation scanning process.

Accordingly, this disclosure further provides a LiDAR, including: a plurality of light-emitter units and a plurality of calibrated detector units, the plurality of calibrated detector units being in one-to-one correspondence with the plurality of light-emitter units; and a detection processor device configured to implement the detection method of this disclosure.

In addition, this disclosure further provides a LiDAR, including: a plurality of light-emitter units and a plurality of calibrated detector units, the plurality of calibrated detector units being in one-to-one correspondence with the plurality of light-emitter units; and an acquisition module configured to perform a fixed value acquisition operation to determine fixed value acquisition data, the fixed value acquisition operation including: performing acquisition, by the plurality of light-emitter units and the plurality of calibrated detector units, to determine the fixed value acquisition data; and further configured to perform at least one interpolation acquisition operation to determine interpolation acquisition data; and a processor module configured to determine a point cloud map based on the fixed value acquisition data and the interpolation acquisition data.

Optionally, the acquisition module includes: a fixed value acquisition unit and an interpolation acquisition unit, the fixed value acquisition unit being configured to perform a fixed value acquisition operation, and the interpolation acquisition unit being configured to perform an interpolation acquisition operation; the interpolation acquisition unit includes: a detector selector and a processor; the detector selector is configured to determine a plurality of interpolated detector units, the plurality of interpolated detector units being in one-to-one correspondence with the plurality of calibrated detector units; and the processor is configured to perform acquisition, by the plurality of light-emitter units and the plurality of interpolated detector units, to determine the interpolation acquisition data.

Optionally, each of the calibrated detector units includes a plurality of detectors, and each of the interpolated detector units includes a plurality of detectors; and the plurality of detectors in the interpolated detector unit are partially different from the plurality of detectors in the corresponding calibrated detector unit.

Optionally, the LiDAR includes: a plurality of detectors arranged in an array to form a detector array; and along a row direction or column direction of the detector array, a distance between the interpolated detector unit and the corresponding calibrated detector unit is smaller than a distance between adjacent calibrated detector units in the corresponding direction; or, along the row direction or column direction of the detector array, the distance between the interpolated detector unit and the corresponding calibrated detector unit is smaller than the size of the calibrated detector unit in the corresponding direction.

Optionally, the interpolation acquisition unit is configured to perform a row-column interpolation acquisition operation to determine row-column interpolation acquisition data, the interpolation acquisition data including the row-column interpolation acquisition data; the detector selector includes: a row-column selector element configured to determine a plurality of row-column interpolated detector units, the direction in which the row-column interpolated detector units point to the corresponding calibrated detector units being parallel to one of the row direction or the column direction of the detector array; and the processor performs acquisition, by the plurality of light-emitter units and the plurality of row-column interpolated detector units, to determine the row-column interpolation acquisition data.

Optionally, the interpolation acquisition unit is configured to perform an oblique interpolation acquisition operation to determine oblique interpolation acquisition data, the interpolation acquisition data further including the oblique interpolation acquisition data; the detector selector includes: an oblique selector element configured to determine a plurality of obliquely interpolated detector units, the direction in which the obliquely interpolated detector unit points to the corresponding calibrated detector units intersecting with both the row direction and the column direction; and the processor performs acquisition, by the plurality of light-emitter units and the plurality of obliquely interpolated detector units to determine the oblique interpolation acquisition data.

Optionally, the detector includes a single photon avalanche diode.

Optionally, the light-emitter units used in the process of performing the fixed value acquisition operation by the fixed value acquisition unit are calibrated light-emitter units; the interpolation acquisition unit further includes: a light-emitter selector configured to determine a plurality of interpolated light-emitter units based on the plurality of interpolated detector units, the plurality of interpolated light-emitter units being in one-to-one correspondence with the calibrated light-emitter units; and the processor performs acquisition, by the plurality of interpolated light-emitter units and the plurality of interpolated detector units, to determine the interpolation acquisition data.

Optionally, each of the calibrated light-emitter units includes a plurality of emitters, and each of the interpolated light-emitter units includes a plurality of emitters; and the plurality of emitters in the interpolated light-emitter unit are partially different from the plurality of emitters in the corresponding calibrated light-emitter unit.

Optionally, the emitter includes a vertical cavity surface emitting emitter.

Optionally, the LiDAR further includes a scanner device configured to deflect the light generated by the light-emitter units around the rotation axis to a detection angle by rotating or swinging; the fixed value acquisition unit is further configured to determine a detection angle, the fixed value acquisition data corresponding to the detection angle; and the interpolation acquisition unit is further configured to determine a detection angle, the interpolation acquisition data corresponding to the detection angle.

Optionally, the rotation axis is parallel to one of the row direction or column direction of the detector array; the scanning process of the scanner device includes: a fixed value scanning process; and the fixed value scanning process includes: performing, by the fixed value acquisition unit, a fixed value acquisition operation at an i-th detection angle; and performing, by the interpolation acquisition unit, a row-column interpolation acquisition operation at an i+1th detection angle, the direction in which the row-column interpolated detector unit points to the corresponding calibrated detector unit being parallel to the direction of the rotation axis in the row-column interpolation acquisition operation.

Optionally, the scanning process of the scanner device further includes: an interpolation scanning process, the interpolation scanning process being located between two adjacent fixed value scanning processes; and the interpolation scanning process includes: performing, by the interpolation acquisition unit, a row-column interpolation acquisition operation at the i-th detection angle, the direction in which the row-column interpolated detector unit points to the corresponding calibrated detector unit being perpendicular to the direction of the rotation axis in the row-column interpolation acquisition operation; and performing, by the interpolation acquisition unit, an oblique interpolation acquisition operation at the i+1th detection angle.

Optionally, the scanning process of the scanner device includes: performing a first fixed value scanning process, a first interpolation scanning process, a second fixed value scanning process, and a second interpolation scanning process; where the first fixed value scanning process includes: performing, by the fixed value acquisition unit, the fixed value acquisition operation at the i-th detection angle; and performing, by the interpolation acquisition unit, the row-column interpolation acquisition operation at the i+1th detection angle; the first interpolation scanning process includes: performing, by the interpolation acquisition unit, the row-column interpolation acquisition operation at the i-th detection angle; and performing, by the interpolation acquisition unit, the oblique interpolation acquisition operation at the i+1th detection angle; the second fixed value scanning process includes: performing, by the interpolation acquisition unit, the row-column interpolation acquisition operation at the i-th detection angle; and performing, by the fixed value acquisition unit, the fixed value acquisition operation at the i+1th detection angle; the second interpolation scanning process includes: performing, by the interpolation acquisition unit, the oblique interpolation acquisition operation at the i-th detection angle; and performing, by the interpolation acquisition unit, the row-column interpolation acquisition operation at the i+1th detection angle; and the direction in which the row-column interpolated detector unit points to the corresponding calibrated detector unit in the row-column interpolation acquisition operation performed at the i-th detection angle during the second fixed value scanning process is the same as the direction in which the row-column interpolated detector unit points to the corresponding calibrated detector unit in the row-column interpolation acquisition operation performed at the i+1th detection angle during the first fixed value scanning process; the direction in which the row-column interpolated detector unit points to the corresponding calibrated detector unit in the row-column interpolation acquisition operation performed at the i+1th detection angle during the second interpolation scanning process is the same as the direction in which the row-column interpolated detector unit points to the corresponding calibrated detector unit in the row-column interpolation acquisition operation performed at the i-th detection angle during the first interpolation scanning process; and the direction in which the obliquely interpolated detector unit points to the corresponding calibrated detector unit in the oblique interpolation acquisition operation performed at the i-th detection angle during the second interpolation scanning process is the same as the direction in which the obliquely interpolated detector unit points to the corresponding calibrated detector unit in the oblique interpolation acquisition operation performed at the i+1th detection angle during the first interpolation scanning process.

Compared with the existing technologies, technical solutions of this disclosure have the following advantages:

In the technical solutions of this disclosure, in addition to performing a fixed value acquisition operation to determine fixed value acquisition data, at least one interpolation acquisition operation is further performed to determine interpolation acquisition data. The final point cloud map is generated based on both the fixed value acquisition data and the interpolation acquisition data. By performing the at least one interpolation acquisition operation, data other than the fixed value acquisition data can be determined. The point cloud map determined by stitching the fixed value acquisition data with the interpolation acquisition data particularly has a higher channel number density. Furthermore, by increasing the number of acquisition operations to increase the channel number density, there is no need to increase hardware costs, and the optical-mechanical complexity is not increased, thereby effectively controlling the costs and ensuring the reliability.

In an optional solution of this disclosure, the step of interpolation acquisition operation further includes: determining a plurality of interpolated light-emitter units based on the plurality of interpolated detector units, the plurality of interpolated light-emitter units being in one-to-one correspondence with the calibrated light-emitter units; and performing acquisition, by the plurality of interpolated light-emitter units and the plurality of interpolated detector units, to determine the interpolation acquisition data. The interpolated light-emitter units are determined based on the interpolated detector units to enable the central positions of the light-emitter units to be synchronously translated with the detector units during each interpolation acquisition operation to ensure that the receiving field of view of the interpolated detector units corresponds to the spot center of the echo light, to ensure the detection efficiency and the distance measurement capability.

## BRIEF DESCRIPTION OF DRAWINGS

To more clearly describe the technical solutions of the embodiments of this disclosure or the existing technologies, the drawings to be used in the description of the embodiments or the existing technologies are briefly introduced below. Apparently, the drawings described below are merely some embodiments of this disclosure. For those of ordinary skills in the art, other drawings can also be obtained based on these drawings without making creative work.

Fig. 1 is a schematic structural diagram of an embodiment of a LiDAR in this disclosure;

Fig. 2 is a schematic structural diagram of a detector array in a detector module of the embodiment of the LiDAR shown in Fig. 1;

Fig. 3 is a schematic structural diagram of an emitter array in an emitter module of the embodiment of the LiDAR shown in Fig. 1;

Fig. 4 is a schematic flow chart of a detection method implemented by the detection processor device in the embodiment of the LiDAR shown in Fig. 1;

Fig. 5 is a schematic diagram of an optically sensitive position of a calibrated detector unit in the embodiment of the LiDAR shown in Fig. 1;

Fig. 6 is a schematic diagram of an optical path of the receiving field of view of the detector unit in the embodiment of the LiDAR shown in Fig. 1;

Fig. 7 is a schematic flow chart of the step of one interpolation acquisition operation in the detection method implemented by the detection processor device in the embodiment of the LiDAR shown in Fig. 4;

Fig. 8 is a schematic flow chart of the step of at least one interpolation acquisition operation in the detection method implemented by the detection processor device in the embodiment of the LiDAR shown in Fig. 4;

Fig. 9 is a schematic diagram showing the case where the direction in which the row-column interpolated detector unit points to the corresponding calibrated detector unit is parallel to the row direction of the detector array in the row-column interpolation acquisition operation in the detection method implemented by the detection processor device in the embodiment of the LiDAR shown in Fig. 4;

Fig. 10 is a schematic diagram showing the case where the direction in which the row-column interpolated detector unit points to the corresponding calibrated detector unit is parallel to the column direction of the detector array in the row-column interpolation acquisition operation in the detection method implemented by the detection processor device in the embodiment of the LiDAR shown in Fig. 4;

Fig. 11 is a schematic diagram of the obliquely interpolated detector unit and the corresponding calibrated detector unit in the oblique interpolation acquisition operation in the detection method implemented by the detection processor device in the embodiment of the LiDAR shown in Fig. 4;

Fig. 12 is a schematic diagram of an acquisition operation by an interpolated light-emitter unit in the detection method implemented by the detection processor device in the embodiment of the LiDAR shown in Fig. 4;

Fig. 13 is a schematic diagram of a detector array in the detection method implemented by the detection processor device in another embodiment of the LiDAR of this disclosure;

Fig. 14 is a schematic diagram of a detector array in a first fixed value scanning process in the detection method implemented by the detection processor device in yet another embodiment of the LiDAR of this disclosure;

Fig. 15 is a schematic diagram of a detector array in a first interpolation scanning process in the detection method implemented by the detection processor device in the embodiment of the LiDAR shown in Fig. 14;

Fig. 16 is a schematic diagram of a detector array in a second fixed value scanning process in the detection method implemented by the detection processor device in the embodiment of the LiDAR shown in Fig. 14;

Fig. 17 is a schematic diagram of a detector array in a second interpolation scanning process in the detection method implemented by the detection processor device in the embodiment of the LiDAR shown in Fig. 14; and

Fig. 18 is a schematic structural diagram of still another embodiment of a LiDAR in this disclosure.

## DETAILED DESCRIPTION

As can be known from the Background, when increasing the number of channels of a LiDAR in the existing technologies, the hardware cost or the optical-mechanical complexity tends to be increased too. The reason for the increase in hardware cost and optical-mechanical complexity is analyzed with reference to a method for increasing the number of channels of the LiDAR.

Among existing methods for increasing the number of channels of the LiDAR, one method is to increase the number of emitting emitters and receiving detectors in the design stage. For example, a 64-channel LiDAR uses 64 emitters and 64 detectors. It can be seen that in a 128-channel LiDAR, the numbers of both the emitters and the detectors need to be doubled.

Another method is to divide the original 1-channel laser into a plurality of channels in the optical path of the LiDAR. On the one hand, a spectroscope device needs to be added to the optical path design of the LiDAR, increasing the optical-mechanical complexity. On the other hand, the number of channels of the LiDAR is increased, which poses challenges to the performances such as the distance measurement capability and heat dissipation capability of the LiDAR.

It can be seen that existing methods for increasing the number of channels of the LiDAR cause problems such as increased hardware cost and increased optical-mechanical complexity.

To solve the technical problem, this disclosure provides a detection method for a LiDAR. The LiDAR includes a plurality of light-emitter units and a plurality of calibrated detector units, the plurality of calibrated detector units being in one-to-one correspondence with the plurality of light-emitter units. The detection method includes: performing a fixed value acquisition operation to determine fixed value acquisition data, the fixed value acquisition operation including performing acquisition, by the plurality of light-emitter units and the plurality of calibrated detector units, to determine the fixed value acquisition data; performing at least one interpolation acquisition operation to determine interpolation acquisition data; and determining a point cloud map based on the fixed value acquisition data and the interpolation acquisition data.

In the technical solutions of this disclosure, data other than the fixed value acquisition data can be determined by performing the at least one interpolation acquisition operation. The point cloud map determined by stitching the fixed value acquisition data with the interpolation acquisition data certainly has a higher channel number density. Furthermore, by increasing the number of acquisition operations to increase the channel number density, there is no need to increase hardware costs, and the optical-mechanical complexity is not increased, thereby effectively controlling the costs and ensuring the reliability.

To make the objects, features, and advantages of this disclosure more obvious and understandable, some specific embodiments of this disclosure are described in detail below with reference to the drawings.

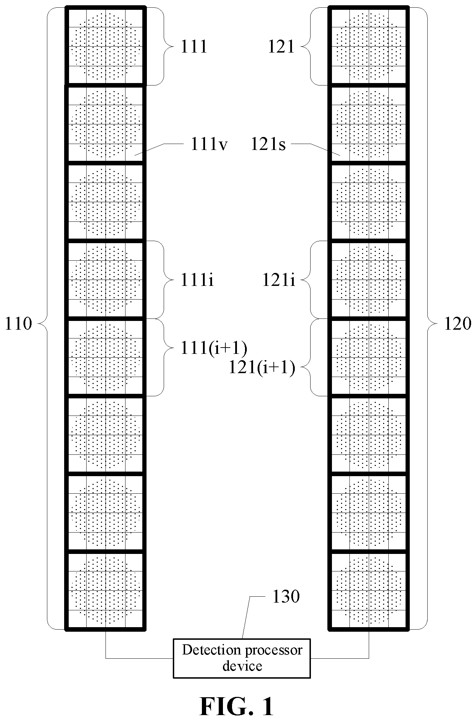

With reference to Fig. 1, a schematic structural diagram of an embodiment of a LiDAR in this disclosure is shown.

As shown in Fig. 1, the LiDAR includes a plurality of light-emitter units 111 and a plurality of detector units 121. The plurality of detector units 121 are in one-to-one correspondence with the plurality of light-emitter units 111.

Specifically, as shown in Fig. 1, the emitter module 110 of the LiDAR includes a plurality of light-emitter units 111. The detector module 120 of the LiDAR includes a plurality of detector units 121. The plurality of detector units 121 are in one-to-one correspondence with the plurality of light-emitter units 111.

The emitter module 110 of the LiDAR is configured to generate detection light. The emitter module 110 includes a plurality of light-emitter units 111, and each of the light-emitter units 111 generates a channel of detection light. The detection light generated by each light-emitter unit 111 covers a particular range of field of view in the far field, that is, each light-emitter unit 111 corresponds to an emitting field of view in the far field.

The detector module 120 of the LiDAR is configured to receive the echo light formed after the reflection of the detection light. The detector module 120 includes a plurality of detector units 121. Each detector unit 121 can receive echo light within a particular range of field of view in the far field, that is, each detector unit 121 corresponds to a receiving field of view in the far field.

The plurality of detector units 121 are in one-to-one correspondence with the plurality of light-emitter units 111. That is, in the LiDAR, the emitting field of view of the light-emitter unit in the far field is the same as the receiving field of view of the corresponding detector unit in the far field to form a physical channel. That is to say, at the far field position, the fields of view of the light-emitter unit and the corresponding detector unit are the same. In this case, the echo light formed by reflection of the detection light emitted by the light-emitter unit is received by the corresponding receiver unit.

Specifically, Fig. 1 shows 8 physical channels in the emitter module 110 and the detector module 120 in the LiDAR, that is, 8 light-emitter units 111 in the emitter module 110, such as a 1st, 2nd, 3rd,..., 8th light-emitter unit, and 8 detector units 121 in the detector module 120, such as a 1st, 2nd, 3rd,..., 8th detector unit. The detection light generated by the light-emitter unit 111i of the i-th channel is reflected by an obstacle outside the LiDAR to form echo light, which is received by the detector unit 121i of the i-th channel.

The light-emitter unit 111i and the detector unit 121i correspond to each other to form the i-th channel; and the light-emitter unit 111(i+1) and the detector unit 121(i+1) correspond to each other to form the (i+1)th channel.

In some embodiments of this disclosure, specifically, each detector unit 121 includes a plurality of detectors 121s. Specifically, as shown in Fig. 1, the LiDAR includes a plurality of detectors 121s arranged in an array to form a detector array, and each of the detector units 121 includes a plurality of the detector units 121s.

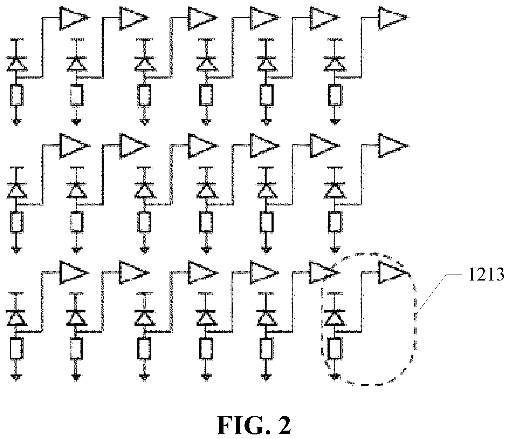

In some embodiments of this disclosure, each of the detectors 121s is an independently addressed and independently controlled detector. That is to say, each of the detectors 121s can be powered up and led out independently (as shown by the circle 1213 in Fig. 2), and the signal from a single detector is read by powering up or reading only the detector on a specific address line. In some embodiments of this disclosure, the detector 1213 can include a single photon avalanche diode ("SPAD").

In some embodiments of this disclosure, as shown in Fig. 1, the light-emitter unit 111 includes a plurality of emitters. Specifically, the LiDAR includes a plurality of emitters 111v arranged in an array to form a detector array; and each of the light-emitter units 111 includes a plurality of the emitters 111v.

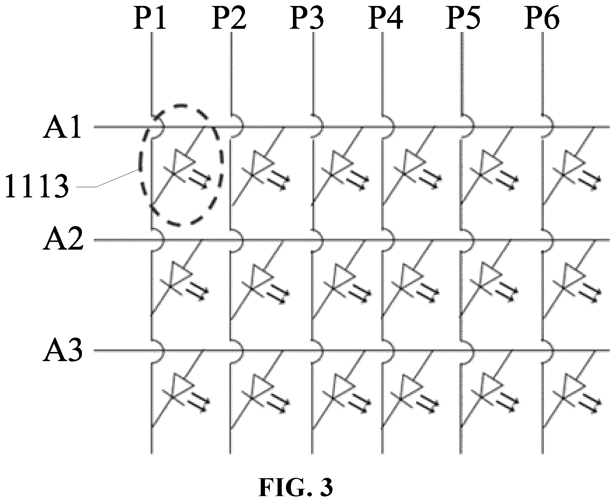

In some embodiments of this disclosure, each of the emitters 111v is an independently addressed and independently controlled emitter. That is to say, each of the emitters 111v can be powered up independently. Specifically, as shown in Fig. 3, the plurality of emitters 111v are arranged in an array to form an emitter array, in which the circle 1113 shows a minimum unit of formation. By applying different voltages to the connection lines of A1 to A3 and P1 to P6, selection is made among the various emitters 111v to achieve independent addressing and independent control of the emitters 111v. Specifically, in some embodiments of this disclosure, the emitters 111v include a vertical cavity surface emitting laser ("VCSEL").

It is to be noted that the practice of configuring the light-emitter unit to include a plurality of emitters is merely an example. In other embodiments of this disclosure, the light-emitter unit can also be an independent laser, such as an edge emitting laser ("EEL").

It is also to be noted that the emitter unit of the LiDAR emits detection light, and the detector unit determined after calibration (assembly and alignment) is the calibrated detector unit. In such a case, the calibrated detector unit and the light-emitter unit correspond to the same field of view in the far field. The light-emitter unit corresponding to the calibrated detector unit is the calibrated light-emitter unit, and the process of calibration (assembly and alignment) is the process of matching of field of view in the far field. The light-emitter unit 111 and the detector unit 121 in the LiDAR shown in Fig. 1 are the calibrated light-emitter unit and the calibrated detector unit of the LiDAR. Accordingly, each of the calibrated light-emitter units includes a plurality of the emitters, and each of the calibrated detector units includes a plurality of the detectors.

In addition, Fig. 1 only shows one column of light-emitter units and one column of detector units. The emitter module and the receiver module of the LiDAR include a plurality of columns of light-emitter units and a plurality of columns of detector units, respectively. Moreover, Fig. 1 shows that the number of light-emitter units included in each column of light-emitter units of the emitter module is also greater than 8, and the number of detector units included in each column of detector units is also greater than 8. Accordingly, shown in Fig. 1 is a part of the emitter array and the detector array of the LiDAR.

In addition, in some embodiments of this disclosure, the LiDAR further includes a scanner device (not shown in the figure). The scanner device can deflect the light ray generated by the light-emitter units to a detection angle by rotating or swinging. Specifically, the LiDAR can be a mechanical LiDAR in which a motor drives the emitter-receiver device to rotate as a whole, a rotating mirror LiDAR, or a micro oscillating-mirror LiDAR. Accordingly, the scanner device can be an integral rotation mechanism with a motor, or a rotating mirror or a micro oscillating-mirror.

With continued reference to Fig. 1, the LiDAR further includes a detection processor device 130 that can implement the detection method of this disclosure.

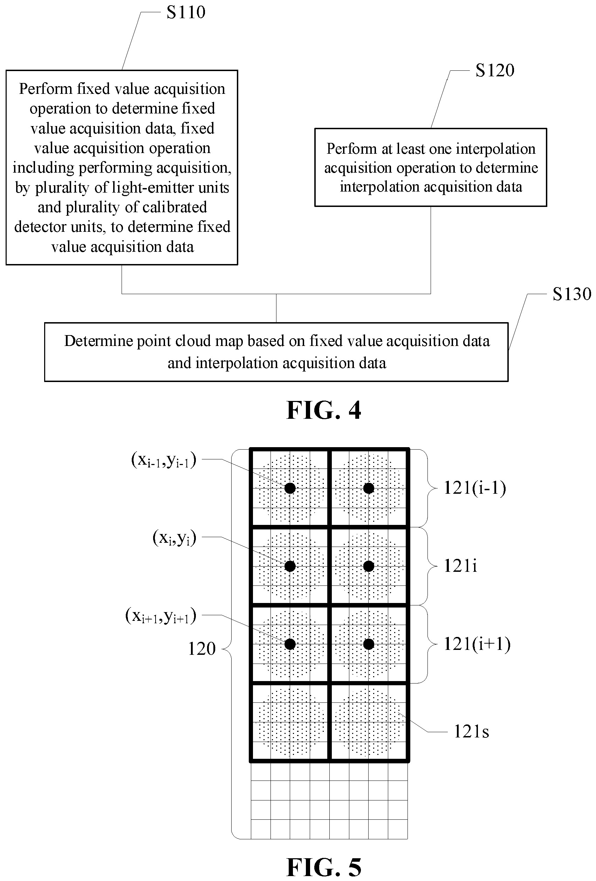

With reference also to Fig. 4, a schematic flow chart of a detection method implemented by the detection processor device in the embodiment of the LiDAR shown in Fig. 1 is shown.

The detection method includes: executing a step S110 of performing a fixed value acquisition operation to determine fixed value acquisition data, the fixed value acquisition operation including performing acquisition, by the plurality of light-emitter units and the plurality of calibrated detector units, to determine the fixed value acquisition data; executing a step S120 of performing at least one interpolation acquisition operation to determine interpolation acquisition data; and finally executing a step S130 of determining a point cloud map based on the fixed value acquisition data and the interpolation acquisition data.

By performing the at least one interpolation acquisition operation, data other than the fixed value acquisition data can be determined. The point cloud map determined by stitching the fixed value acquisition data with the interpolation acquisition data particularly has a higher channel number density. Furthermore, by increasing the number of acquisition operations to increase the channel number density, there is no need to increase hardware costs, and the optical-mechanical complexity is not increased, thereby effectively controlling the costs and ensuring the reliability.

The step S 110 is executed to perform the fixed value acquisition operation.

Specifically, in some embodiments of this disclosure, the step S110 is executed to perform the fixed value acquisition operation to determine fixed value acquisition data. The fixed value acquisition operation includes performing acquisition, by the plurality of light-emitter units and the plurality of calibrated detector units, to determine the fixed value acquisition data.

The performing acquisition by the plurality of light-emitter units and the plurality of calibrated detector units refers to data acquisition achieved by transmitting and receiving optical signals by the light-emitter units and the calibrated detector units.

It is to be noted that the detector unit determined after calibration of the LiDAR is the calibrated detector unit. Accordingly, in the step of performing acquisition, by the plurality of light-emitter units and the plurality of calibrated detector units, to determine the fixed value acquisition data in the process of executing the step S110 to perform the fixed value acquisition operation, the light-emitter unit is a calibrated light-emitter unit.

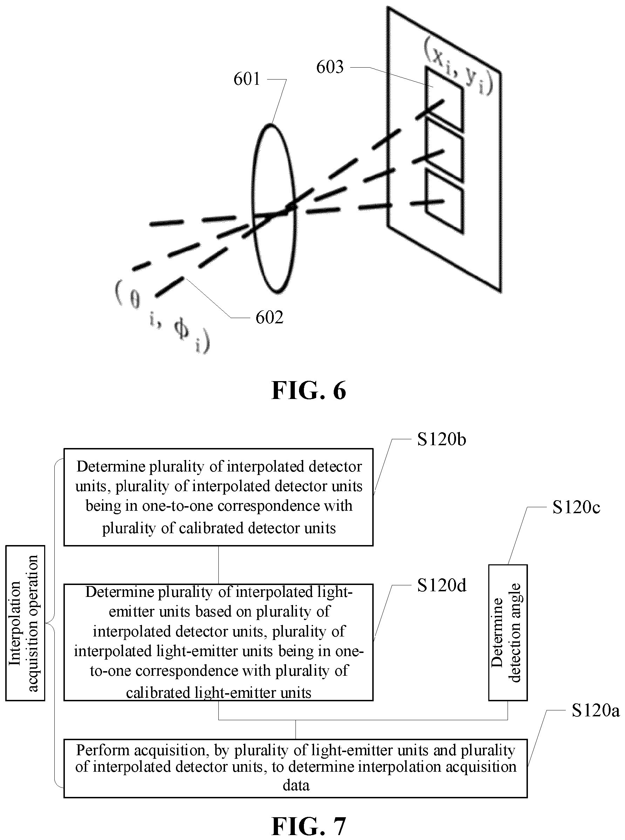

Specifically, as shown in Fig. 5, the optically sensitive position of the calibrated detector unit 121i of the i-th channel (i.e., the coordinates of the central position is $(x_i, y_i)$). As shown also in Fig. 6, the angle of the field of view corresponding to the calibrated detector unit 121i of the i-th channel is (

$$\theta_i = \frac{y_i}{f}, \phi_i = \frac{x_i^{'}}{f^{.}}$$

) (shown by the dotted line 602 in Fig. 6), where $\theta_i$ is the angle of the vertical field of view, $\varphi$ is the angle of the horizontal field of view, and f is the focal length of the optical system 601. It can be known from Fig. 6 that the receiving field of view corresponds to the central position of the spot, that is, the box 603 is the position corresponding to the calibrated detector unit 121i of the i-th channel.

It is to be noted that in some embodiments of this disclosure, the LiDAR has a scanner device. In this case, the fixed value acquisition operation further includes, before performing acquisition, by the plurality of light-emitter units and the plurality of calibrated detector units, to determine the fixed value acquisition data, determining a detection angle. The fixed value acquisition data corresponds to the detection angle.

As shown in Fig. 4, the step S120 is executed to perform at least one interpolation acquisition operation.

It is to be noted that the sequence of executing the step S110 to perform the fixed value acquisition operation and executing the step S120 to perform at least one interpolation acquisition operation is not limited.

With reference also to Fig. 7, a schematic flow chart of the step of one interpolation acquisition operation in the detection method implemented by the detection processor device in the embodiment of the LiDAR shown in Fig. 4 is shown.

As shown in Fig. 7, in some embodiments of this disclosure, the one interpolation acquisition operation includes: executing the step S120a to determine a plurality of interpolated detector units, the plurality of interpolated detector units being in one-to-one correspondence with the plurality of calibrated detector units; and then executing the step S120b to perform acquisition, by the plurality of light-emitter units and the plurality of interpolated detector units, to determine the interpolation acquisition data.

The step of determining the plurality of interpolated detector units can determine the position of the detector unit that receives the optical signal in the interpolation acquisition operation, thereby expanding the number of channels and improving resolution without additionally increasing the optical-mechanical complexity.

The plurality of interpolated detector units are in one-to-one correspondence with the plurality of calibrated detector units, and the plurality of calibrated detector units (i.e., the detector units 121 in Fig. 2) are in one-to-one correspondence with the plurality of light-emitter units 111 to form physical channels. In this case, the plurality of interpolated detector units are in one-to-one correspondence with the plurality of light-emitter units 111 to form channels in the interpolation acquisition operation. Accordingly, in the step of executing the step S 120b to perform acquisition, by the plurality of light-emitter units and the plurality of interpolated detector units, to determine the interpolation acquisition data, the detection light generated by the light-emitter unit 111i of the i-th channel is reflected by an obstacle outside the LiDAR to form echo light, which is received by the interpolated detector unit of the i-th channel.

It is to be noted that in some embodiments of this disclosure, the LiDAR has a scanner device. In this case, as shown in Fig. 7, the interpolation acquisition operation further includes, before performing acquisition, by the plurality of light-emitter units and the plurality of interpolated detector units, to determine the interpolation acquisition data, executing the step S 120c to determine a detection angle, the interpolation acquisition data corresponding to the detection angle.

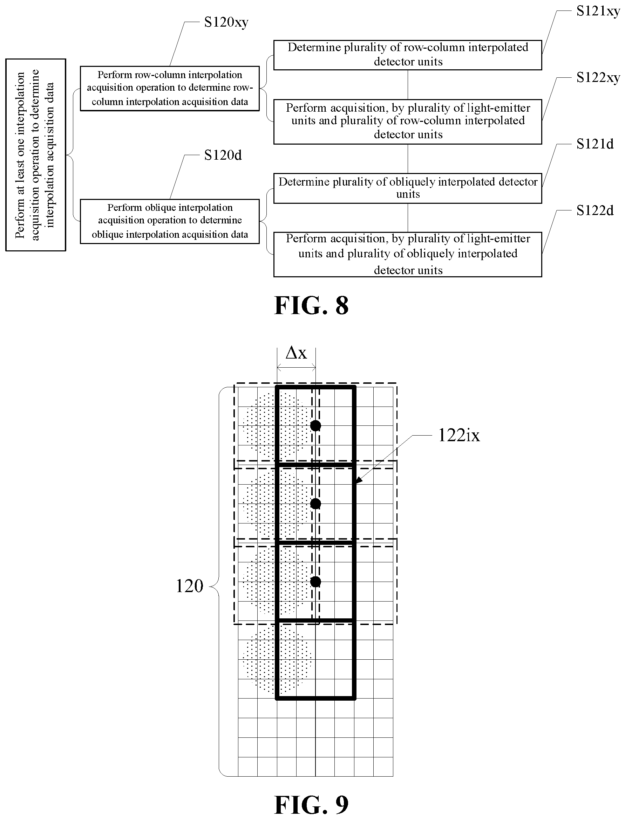

With reference also to Fig. 8, a schematic flow chart of the step of performing at least one interpolation acquisition operation in the detection method implemented by the detection processor device in the embodiment of the LiDAR shown in Fig. 4 is shown.

As described, in the LiDAR, the plurality of detectors 121s are arranged in an array to form a detector array. In this case, in some embodiments of this disclosure, the step of executing the step S 120 to perform at least one interpolation acquisition operation to determine interpolation acquisition data includes: executing the step S120xy to perform a row-column interpolation acquisition operation to determine row-column interpolation acquisition data, the interpolation acquisition data including the row-column interpolation acquisition data; where the row-column interpolation acquisition operation includes: executing the step 121xy to determine a plurality of row-column interpolated detector units, the direction in which the row-column interpolated detector units point to the corresponding calibrated detector units being parallel to one of the row direction or the column direction of the detector array; and executing the step 122xy to perform acquisition, by the plurality of light-emitter units and the plurality of row-column interpolated detector units, to determine the row-column interpolation acquisition data.

With reference also to Fig. 9, a schematic diagram showing the case where the direction in which the row-column interpolated detector unit points to the corresponding calibrated detector unit is parallel to the row direction of the detector array in the row-column interpolation acquisition operation is shown.

In the step of determining the row-column interpolated detector unit 122ix, the direction in which the row-column interpolated detector unit 122ix points to the corresponding calibrated detector unit (shown by the dotted line box in Fig. 9) is parallel to the row direction of the detector array.

In this case, the row-column interpolated detector unit 122ix is horizontally translated by Δx relative to the calibrated detector unit 121i (as shown in Fig. 5). That is, the detector at the corresponding position is powered up or read, and then the angle of the field of view corresponding to the interpolated detector unit 121ix of the i-th channel is ($\theta_i, \phi_i + \frac{\Delta x}{f}$).

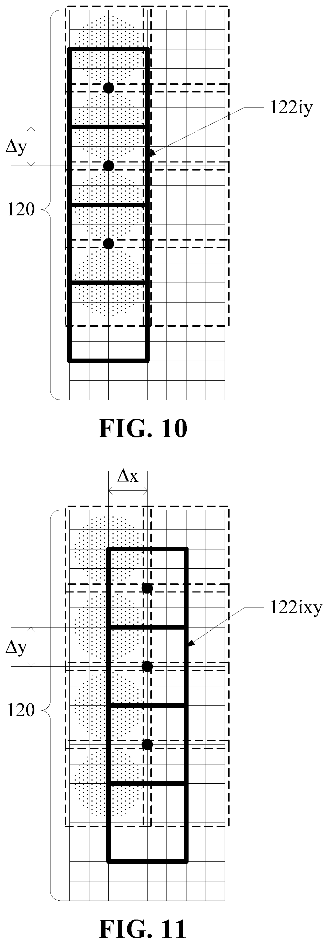

With reference also to Fig. 10, a schematic diagram showing the case where the direction in which the row-column interpolated detector unit points to the corresponding calibrated detector unit is parallel to the column direction of the detector array in the row-column interpolation acquisition operation is shown.

In the step of determining the row-column interpolated detector unit 122iy, the direction in which the row-column interpolated detector unit 122iy points to the corresponding calibrated detector unit (shown by the dotted line box in Fig. 10) is parallel to the column direction of the detector array.

In this case, the row-column interpolated detector unit 122iy is vertically translated by Δy relative to the calibrated detector unit 121i (as shown in Fig. 5). That is, the detector at the corresponding position is powered up or read, and then the angle of the field of view corresponding to the interpolated detector unit 121ix of the i-th channel is ($\theta_i + \frac{\Delta y}{f}, \phi_i'$).

With continued reference to Fig. 8, the step of executing the step S120 to perform at least one interpolation acquisition operation to determine interpolation acquisition data further includes: executing the step S120d to perform an oblique interpolation acquisition operation to determine oblique interpolation acquisition data, the interpolation acquisition data further including the oblique interpolation acquisition data, where the oblique interpolation acquisition operation includes: executing the step S121d to determine a plurality of obliquely interpolated detector units, the direction in which the obliquely interpolated detector units point to the corresponding calibrated detector units intersecting with both the row direction and the column direction; and executing the step S 122d to perform acquisition, by the plurality of light-emitter units and the plurality of obliquely interpolated detector units, to determine the oblique interpolation acquisition data.

With reference also to Fig. 11, a schematic diagram of the obliquely interpolated detector unit and the corresponding calibrated detector unit in the oblique interpolation acquisition operation is shown.

In the step of determining the obliquely interpolated detector unit 122ixy, the direction in which the obliquely interpolated detector unit 122ixy points to the corresponding calibrated detector unit (shown by the dotted box in Fig. 11) intersects with both the row direction and the column direction.

Accordingly, the obliquely interpolated detector unit 122ixy is horizontally translated by Δx and vertically translated by Δy relative to the calibrated detector unit 121i (as shown in Fig. 5). That is, the detector at the corresponding position is powered up or read, and then the angle of the field of view corresponding to the obliquely interpolated detector unit 122ixy of the i-th channel is ($\theta_i + \frac{\Delta y}{f}, \phi_i + \frac{\Delta x'}{f}$).

It is to be noted that, as shown in Fig. 5 and Figs. 9 to 11, in some embodiments of this disclosure, along the row direction or the column direction of the detector array, the distance between the interpolated detector unit and the corresponding calibrated detector unit is smaller than the distance between the adjacent calibrated detector units in the corresponding direction.

As shown in Figs. 5 and 9, along the row direction of the detector array, the distance between the row-column interpolated detector unit 122ix and the corresponding calibrated detector unit is smaller than the distance between the adjacent calibrated detector units in the row direction. That is, the row-column interpolated detector unit 122ix is located between the two adjacent calibrated detector units in the row direction.

As shown in Figs. 5 and 10, along the column direction of the detector array, the distance between the row-column interpolated detector unit 122iy and the corresponding calibrated detector unit is smaller than the distance between the adjacent calibrated detector units in the column direction. That is, the row-column interpolated detector unit 122iy is located between the two adjacent calibrated detector units in the column direction.

Specifically, as shown in Figs. 5 and 11, along the row direction of the detector array, the distance between the obliquely interpolated detector unit 122ixy and the corresponding calibrated detector unit is smaller than the distance between the adjacent calibrated detector units in the row direction; that is, the obliquely interpolated detector unit 122ixy is located between the two adjacent calibrated detector units in the row direction; and, along the column direction of the detector array, the distance between the obliquely interpolated detector unit 122ixy and the corresponding calibrated detector unit is smaller than the distance between the adjacent calibrated detector units in the column direction, that is, the obliquely interpolated detector unit 122ixy is located between the two adjacent calibrated detector units in the column direction.

It is also to be noted that in some embodiments of this disclosure, the receiver module of the LiDAR includes a plurality of rows and a plurality of columns of detector units. However, this pattern is only an example. In some embodiments of this disclosure, the receiver module of the LiDAR can also include only one column of detector units or one row of detector units.

In some embodiments of this disclosure, when the receiver module of the LiDAR includes only one column of detector units or one row of detector units, along the row direction or column direction of the detector array, the distance between the interpolated detector unit and the corresponding calibrated detector unit is smaller than the size of the calibrated detector unit in the corresponding direction.

Specifically, when the receiver module of the LiDAR includes only one column of detector units, along the row direction of the detector array, the distance between the interpolated detector unit, including at least one of a row-column interpolation unit and an oblique interpolation unit, and the corresponding calibrated detector unit is smaller than the size of the calibrated detector unit in the row direction. That is, the optically sensitive position (i.e., the central position) of the interpolated detector unit is located within the range of the calibrated detector unit in the row direction.

When the receiver module of the LiDAR includes only one row of detector units, along the column direction of the detector array, the distance between the interpolated detector unit, including at least one of a row-column interpolation unit and an oblique interpolation unit, and the corresponding calibrated detector unit is smaller than the size of the calibrated detector unit in the column direction. That is, the optically sensitive position (i.e., the central position) of the interpolated detector unit is located within the range of the calibrated detector unit in the column direction.

The field of view of the detector unit corresponds to the central position of the spot. When the receiver module of the LiDAR includes a plurality of rows and columns of detector units, the interpolated detector unit is located between the two adjacent calibrated detector units in the corresponding direction. Accordingly, the field of view corresponding to the interpolated detector unit is located between the fields of view corresponding to the two adjacent calibrated detector units in the corresponding direction. Accordingly, the included angle between the field of view corresponding to the interpolated detector unit and the field of view corresponding to the adjacent calibrated detector unit is particularly smaller than the included angle between the fields of view corresponding to the two adjacent calibrated detector units. It can be seen that, by performing the interpolation acquisition operation, the resolution can be effectively improved without increasing the optical-mechanical complexity.

Accordingly, the distance between the interpolated detector unit and the corresponding calibrated detector unit can be set based on the resolution of the LiDAR. Specifically, in the embodiments shown in Fig. 5 and Figs. 9-10, along the row direction of the detector array, the distance $\Delta x$ between the interpolated detector unit and the corresponding calibrated detector unit is:

$$\frac{\Delta x}{f} = (\phi_{i+1} - \phi_i)/2$$

, and along the column direction of the detector array, the distance $\Delta y$ between the interpolated detector unit and the corresponding calibrated detector

unit is: $\frac{\Delta y}{f} = (\theta_{i+1} - \theta_i)/2$.

The receiver module of the LiDAR can also include only one column of detector units or one row of detector units, and the optically sensitive position (i.e., the central position) of the interpolated detector unit is located within the range in the corresponding direction of the calibrated detector unit. In this case, a part of the field of view corresponding to the interpolated detector unit coincides with the field of view of the calibrated detector unit in the corresponding direction, and the other part extends beyond the calibrated detector unit in the corresponding direction. Accordingly, the included angle between the field of view corresponding to the interpolated detector unit and the field of view corresponding to the adjacent calibrated detector unit is particularly smaller than the included angle between the fields of view corresponding to the two adjacent calibrated detector units (assuming that the two calibrated detector units are arranged to be adjacent with each other). It can be seen that, by performing the interpolation acquisition operation, the resolution can be effectively improved without increasing the optical-mechanical complexity.

Accordingly, in the step of interpolation acquisition operation, along at least one of the row direction or the column direction of the detector unit, the distance between the interpolated detector unit and the corresponding calibrated detector unit enables the difference between the angle of the field of view corresponding to the interpolated detector unit and the angle of the field of view corresponding to the corresponding calibrated detector unit to be less than the calibrated resolution of the LiDAR (i.e., the resolution of the LiDAR without the interpolation acquisition operation).

It is also to be noted that in some embodiments of this disclosure, each of the interpolated detector units includes a plurality of detectors, and the plurality of detectors in the interpolated detector unit are partially different from the plurality of detectors in the corresponding calibrated detector unit.

With continued reference to Fig. 7, in some embodiments of this disclosure, the one interpolation acquisition operation further includes: executing the step S120d to determine a plurality of interpolated light-emitter units based on the plurality of interpolated detector units, the plurality of interpolated light-emitter units being in one-to-one correspondence with the calibrated light-emitter units; and executing the step S120b, in the step of performing acquisition, by the plurality of light-emitter units and the plurality of interpolated detector units, to determine the interpolation acquisition data, to perform acquisition, by the plurality of interpolated light-emitter units and the plurality of interpolated detector units, to determine the interpolation acquisition data.

The interpolated light-emitter units are determined based on the interpolated detector units to enable the central positions of the light-emitter units to be synchronously translated with the detector units during each interpolation acquisition operation to ensure that the receiving field of view of the interpolated light-emitter units corresponds to the spot center of the echo light, to ensure the detection efficiency and the distance measurement capability.

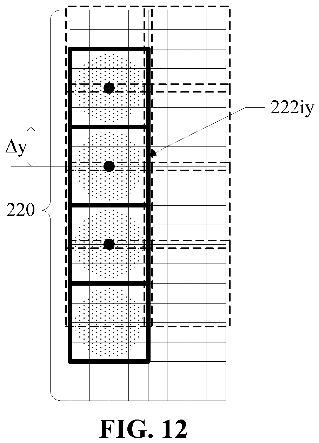

As shown in Fig. 12, in the interpolation acquisition operation of performing acquisition by the plurality of interpolated light-emitter units and the plurality of interpolated detector units, the position of the spot of the echo light on the detector array can be translated synchronously with the detector unit, which can ensure distance measurement capability and detection efficiency.

It is to be noted that the LiDAR includes a plurality of emitters, each of the calibrated light-emitter units includes a plurality of the emitters, and each of the interpolated light-emitter units includes a plurality of the emitters; and the plurality of emitters in the interpolated light-emitter unit are partially different from the plurality of emitters in the corresponding calibrated light-emitter unit.

The step S 130 is executed to determine the point cloud map based on the fixed value acquisition data and the interpolation acquisition data.

Specifically, the point cloud map is determined based on the sum of the fixed value acquisition data determined by the fixed value acquisition operation and the interpolation acquisition data determined by each of the interpolation acquisition operations.

In some embodiments of this disclosure, the LiDAR further includes a scanner device, the fixed value acquisition data corresponds to the detection angle, and the interpolation acquisition data corresponds to the detection angle. In this case, the point cloud map is determined based on the fixed value acquisition data and the interpolation acquisition data at all detection angles.

It is to be noted that for a LiDAR with a scanner device, different acquisition operations can be used at different angles during the scanning process for the same frame, and different acquisition operations can be used during the scanning processes for different frames, and then the results of a plurality of scans are combined to achieve multi-frame stitching, thereby doubling the number of channels and improving the resolution without increasing the optical-mechanical complexity.

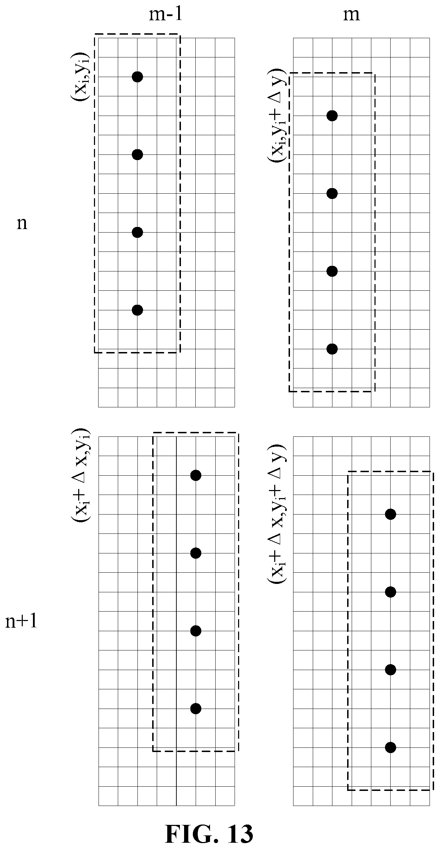

With reference to Fig. 13, a schematic diagram of a detector array in the detection method implemented by the detection processor device in another embodiment of the LiDAR of this disclosure is shown.

It is to be noted that Fig. 13 shows only the schematic positions of 4 detector units in the LiDAR. The number of detector units in the LiDAR is not limited to 4 and can be other numbers. The solid black dot in the figure represents the optically sensitive position (i.e., the central position) of each detector unit. The coordinates marked in the figure are the coordinates of the optically sensitive position of the uppermost detector unit among the 4 detector units in the column shown.

In some embodiments of this disclosure, the LiDAR has a scanner device, and the rotation axis of the scanner device is parallel to the column direction of the detector array. In other embodiments of this disclosure, the rotation axis of the scanner device can also be parallel to the row direction of the detector array, and no limitation is made in this respect in this disclosure.

As shown in Fig. 13, the detection method includes a fixed value scanning process. The fixed value scanning process includes: performing a fixed value acquisition operation at an (m-1)th detection angle; and performing a row-column interpolation acquisition operation at an m-th detection angle, the direction in which the row-column interpolated detector unit points to the corresponding calibrated detector unit being parallel to the rotation axis in the row-column interpolation acquisition operation.

Specifically, the detection method includes: performing a fixed value scanning process in the n-th frame. Accordingly, in the n-th frame and at the (m-1)th detection angle, a fixed value acquisition operation is performed; and in the n-th frame and at the m-th detection angle, a row-column interpolation acquisition operation is performed, the direction in which the row-column interpolated detector unit points to the corresponding calibrated detector unit being parallel to the column direction of the detector array in the row-column interpolation acquisition operation.

As shown in the first row in Fig. 13, in the n-th frame and at the m-1th detection angle, the 4 detector units are calibrated detector units, where the coordinates of the optically sensitive position of the uppermost detector unit are $(x_i, y_i)$. In the n-th frame and at the m-th detection angle, the 4 detector units are row-column interpolated detector units, and the connection line between each of the row-column interpolated detector units and the corresponding calibrated detector unit is parallel to the column direction of the detector array, where the coordinates of the optically sensitive position of the uppermost detector unit are $(x_i, y_i+\Delta y)$.

As shown in Fig. 13, in some embodiments of this disclosure, the detection method further includes at least one interpolation scanning process, the interpolation scanning process being located between two adjacent fixed value scanning processes. The interpolation scanning operation includes performing a row-column interpolation acquisition operation at the m-1th detection angle, the direction in which the row-column interpolated detector unit points to the corresponding calibrated detector unit being perpendicular to the direction of the rotation axis in the row-column interpolation acquisition operation; and performing an oblique interpolation acquisition operation at the m-th detection angle.

Specifically, the detection method includes performing the interpolation scanning process in the (n+1)th frame. Accordingly, in the (n+1)th frame and at the (m-1)th detection angle, a row-column interpolation acquisition operation is performed, the direction in which the row-column interpolated detector unit points to the corresponding calibrated detector unit being parallel to the row direction of the detector array in the row-column interpolation acquisition operation; and in the (n+1)th frame and at the m-th detection angle, the oblique interpolation acquisition operation is performed.

As shown in the second row in Fig. 13, in the (n+1)th frame and at the (m-1)th detection angle, the 4 detector units are row-column interpolated detector units, and the connection line between each of the row-column interpolated detector units and the corresponding calibrated detector unit is parallel to the row direction of the detector array, where the coordinates of the optically sensitive position of the uppermost detector unit are $(x_i+\Delta x, y_i)$; and in the (n+1)th frame and at the m-th detection angle, the 4 detector units are obliquely interpolated detector units, where the coordinates of the optically sensitive position of the uppermost detector unit are $(x_i+\Delta x, y_i+\Delta y)$.

Inserting an interpolation scanning process between adjacent fixed value scanning processes enables the row-column interpolated detector unit and the obliquely interpolated detector unit to fill in between the adjacent calibrated detector units, thereby uniformly expanding the number of channels and improving the resolution.

It is to be noted that to reduce the difficulty in detector control and the difficulty in reading of the detector array, the calibrated detector unit and the row-column interpolated detector unit in the fixed value scanning process in the n-th frame and the row-column interpolated detector unit and the obliquely interpolated detector unit in the interpolation scanning process in the (n+1)th frame are enabled to form a regular dot matrix.

Specifically, in some embodiments of this disclosure, along a direction perpendicular to the rotation axis (i.e., the row direction of the detector array), the space between the obliquely interpolated detector unit determined in the oblique interpolation acquisition operation and the corresponding calibrated detector unit during the interpolation scanning process in the (n+1)th frame is equal to the space between the row-column interpolated detector unit in the row-column interpolation acquisition operation at the (m-1)th detection angle and the corresponding calibrated detector unit during the interpolation scanning process in the (n+1)th frame. Along a direction parallel to the rotation axis (i.e., the column direction of the detector array), the space between the obliquely interpolated detector unit determined in the oblique interpolation acquisition operation and the corresponding calibrated detector unit during the interpolation scanning process in the (n+1)th frame is equal to the space between the row-column interpolated detector unit in the row-column interpolation acquisition operation at the m-th detection angle and the corresponding calibrated detector unit during the fixed value scanning process in the n-th frame.

It is to be noted that in some other embodiments of this disclosure, the traversal of the detectors in the detector array can be realized through the cooperation between different acquisition operations and different scanning processes.

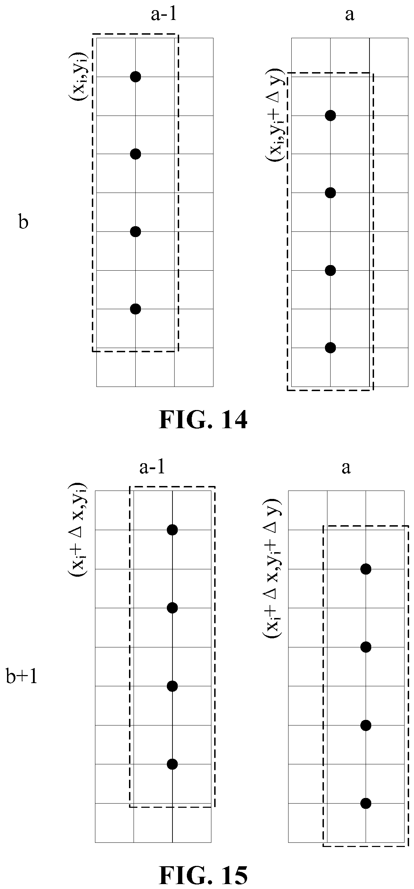

With reference to Figs. 14 to 17, schematic diagrams of a detector array in the detection method implemented by the detection processor device in still another embodiment of the LiDAR of this disclosure are shown.

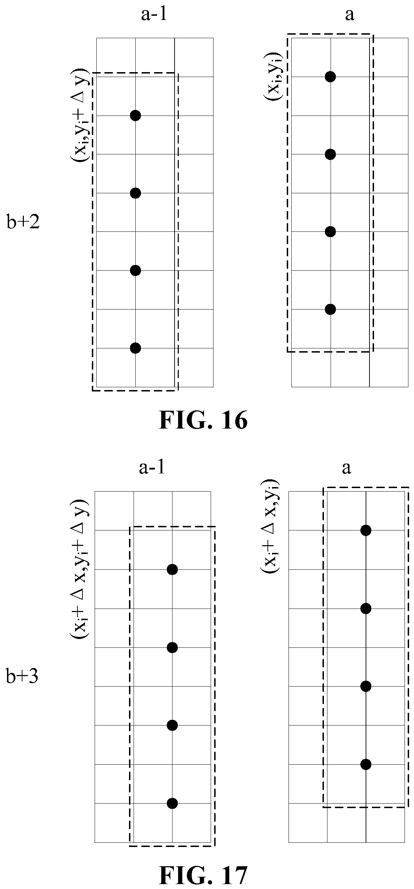

In some embodiments of this disclosure, the detection method includes performing a first fixed value scanning process, a first interpolation scanning process, a second fixed value scanning process, and a second interpolation scanning process; where as shown in the b-th frame in Fig. 14, the first fixed value scanning process includes: performing the fixed value acquisition operation at the (a-1)th detection angle; and performing the row-column interpolation acquisition operation at the a-th detection angle; as shown in the (b+1)th frame in Fig. 15, the first interpolation scanning process includes: performing the row-column interpolation acquisition operation at the (a-1)th detection angle; and performing the oblique interpolation acquisition operation at the a-th detection angle; as shown in the (b+2)th frame in Fig. 16, the second fixed value scanning process includes: performing the row-column interpolation acquisition operation at the (a-1)th detection angle; and performing the fixed value acquisition operation at the a-th detection angle; and as shown in the (b+3)th frame in Fig. 17, the second interpolation scanning process includes: performing the oblique interpolation acquisition operation at the (a-1)th detection angle; and performing the row-column interpolation acquisition operation at the a-th detection angle. The direction in which the row-column interpolated detector unit points to the corresponding calibrated detector unit in the row-column interpolation acquisition operation performed at the (a-1)th detection angle during the second fixed value scanning process is the same as the direction in which the row-column interpolated detector unit points to the corresponding calibrated detector unit in the row-column interpolation acquisition operation performed at the a-th detection angle during the first fixed value scanning process; the direction in which the row-column interpolated detector unit points to the corresponding calibrated detector unit in the row-column interpolation acquisition operation performed at the a-th detection angle during the second interpolation scanning process is the same as the direction in which the row-column interpolated detector unit points to the corresponding calibrated detector unit in the row-column interpolation acquisition operation performed at the (a-1)th detection angle during the first interpolation scanning process; and the direction in which the obliquely interpolated detector unit points to the corresponding calibrated detector unit in the oblique interpolation acquisition operation performed at the (a-1)th angle during the second interpolation scanning process is the same as the direction in which the obliquely interpolated detector unit points to the corresponding calibrated detector unit in the oblique interpolation acquisition operation performed at the a-th detection angle during the first interpolation scanning process.

Different scanning processes and different scanning processes in cooperation with different acquisition operations enable the calibrated detector unit and the interpolated detector unit to traverse each detector in the detector array, which can expand the number of channels and improve the resolution to the greatest extent without increasing the optical-mechanical complexity.

To realize the traversal of each detector in the detector array, and to expand the number of channels and improve the resolution as uniformly as possible, the calibrated detector unit and the interpolated detector unit in the first fixed value scanning process, the first interpolation scanning process, the second fixed value scanning process, and the second interpolation scanning process are enabled to form a regular dot matrix. Specifically, the direction in which the row-column interpolated detector unit points to the corresponding calibrated detector unit and the distance between them in the row-column interpolation acquisition operation performed at the (a-1)th detection angle during the second fixed value scanning process are the same as the direction in which the row-column interpolated detector unit points to the corresponding calibrated detector unit and the distance between them in the row-column interpolation acquisition operation performed at the a-th detection angle during the first fixed value scanning process; the direction in which the row-column interpolated detector unit points to the corresponding calibrated detector unit and the distance between them in the row-column interpolation acquisition operation performed at the a-th detection angle during the second interpolation scanning process are the same as the direction in which the row-column interpolated detector unit points to the corresponding calibrated detector unit and the distance between them in the row-column interpolation acquisition operation performed at the (a-1)th detection angle during the first interpolation scanning process; and the direction in which the obliquely interpolated detector unit points to the corresponding calibrated detector unit and the distance between them in the oblique interpolation acquisition operation performed at the (a-1)th detection angle during the second interpolation scanning process are the same as the direction in which the obliquely interpolated detector unit points to the corresponding calibrated detector unit and the distance between them in the oblique interpolation acquisition operation performed at the a-th detection angle during the first interpolation scanning process.

In addition, this disclosure further provides a LiDAR. The LiDAR includes a plurality of light-emitter units and a plurality of calibrated detector units, the plurality of calibrated detector units being in one-to-one correspondence with the plurality of light-emitter units; and an acquisition module configured to perform a fixed value acquisition operation to determine fixed value acquisition data, the fixed value acquisition operation including: performing acquisition, by the plurality of light-emitter units and the plurality of calibrated detector units, to determine the fixed value acquisition data; and further configured to perform at least one interpolation acquisition operation to determine interpolation acquisition data; and a processor module configured to determine the point cloud map based on the fixed value acquisition data and the interpolation acquisition data.

With reference to Fig. 15, a schematic structural diagram of an embodiment of a LiDAR in this disclosure is shown.

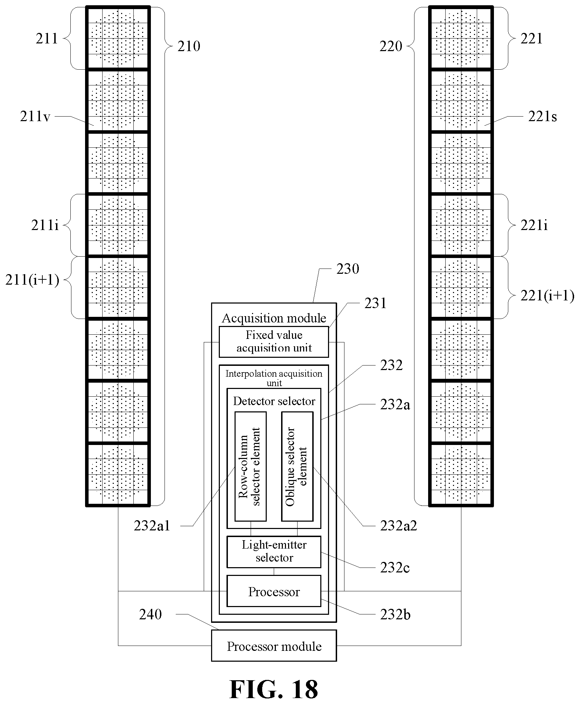

As shown in Fig. 18, the LiDAR includes a plurality of light-emitter units 211 and a plurality of detector units 221. The plurality of detector units 221 are in one-to-one correspondence with the plurality of light-emitter units 211.

Specifically, as shown in Fig. 18, the emitter module 210 of the LiDAR includes a plurality of light-emitter units 211. The detector module 220 of the LiDAR includes a plurality of detector units 221. The plurality of detector units 221 are in one-to-one correspondence with the plurality of light-emitter units 211.

The emitter module 210 of the LiDAR is configured to generate detection light. The emitter module 210 includes a plurality of light-emitter units 211, and each of the light-emitter units 211 generates a channel of detection light. The detection light generated by each light-emitter unit 211 covers a particular range of field of view in the far field, that is, each light-emitter unit 111 corresponds to an emitting field of view in the far field.

The detector module 220 of the LiDAR is configured to receive the echo light formed after the reflection of the detection light. The detector module 220 includes a plurality of detector units 221. Each detector unit 221 can receive echo light within a particular range of field of view in the far field, that is, each detector unit 221 corresponds to a receiving field of view in the far field.

The plurality of detector units 221 are in one-to-one correspondence with the plurality of light-emitter units 211. That is, in the LiDAR, the emitting field of view of the light-emitter unit in the far field is the same as the receiving field of view of the corresponding detector unit in the far field to form a physical channel. That is to say, at the far field position, the fields of view of the light-emitter unit and the corresponding detector unit are the same. In this case, the echo light formed by reflection of the detection light emitted by the light-emitter unit is received by the corresponding receiver unit.

Specifically, Fig. 18 shows 8 physical channels in the emitter module 210 and the detector module 220 in the LiDAR, that is, 8 light-emitter units 211 in the emitter module 210, which are the 1st, 2nd, 3rd,..., 8th light-emitter unit respectively, and 8 detector units 221 in the detector module 120, which are the 1st, 2nd, 3rd,..., 8th detector unit respectively. The detection light generated by the light-emitter unit 211i of the i-th channel is reflected by an obstacle outside the LiDAR to form echo light, which is received by the detector unit 221i of the i-th channel.

The light-emitter unit 211i and the detector unit 221i correspond to each other to form the i-th channel; and the light-emitter unit 211(i+1) and the detector unit 221(i+1) correspond to each other to form the (i+1)th channel.

In some embodiments of this disclosure, specifically, each detector unit 221 includes a plurality of detectors 221s. Specifically, as shown in Fig. 18, the LiDAR includes a plurality of detectors 221s arranged in an array to form a detector array, and each of the detector units 221 includes a plurality of the detector units 221s.

In some embodiments of this disclosure, each of the detectors 221s is an independently addressed and independently controlled detector. That is to say, each of the detectors 221s can be powered up and led out independently (as shown by the circle 1213 in Fig. 2), and the signal from a single detector is read by powering up or reading only the detector on a specific address line. In some embodiments of this disclosure, the detector 221s can include a single photon avalanche diode ("SPAD").

In some embodiments of this disclosure, as shown in Fig. 18, the light-emitter unit 211 includes a plurality of emitters. Specifically, the LiDAR includes a plurality of emitters 211v arranged in an array to form a detector array; and each of the light-emitter units 211 includes a plurality of the emitters 211v.

In some embodiments of this disclosure, each of the emitters 211v is an independently addressed and independently controlled emitter. That is to say, each of the emitters 211v can be powered up independently. Specifically, as shown in Fig. 3, the plurality of emitters 211v are arranged in an array to form an emitter array, in which the circle 1113 shows a minimum unit of formation. By applying different voltages to the connection lines of A1 to A3 and P1 to P6, selection is made among the various emitters 211v to achieve independent addressing and independent control of the emitters 211v. Specifically, in some embodiments of this disclosure, the emitters 211v include a vertical cavity surface emitting laser ("VCSEL").

It is to be noted that the practice of configuring the light-emitter unit as a plurality of emitters is merely an example. In other embodiments of this disclosure, the light-emitter unit can also be an independent laser, such as an edge emitting laser ("EEL").

It is also to be noted that the emitter unit of the LiDAR emits detection light, and the detector unit determined after calibration (assembly and alignment) is the calibrated detector unit. At this time, the calibrated detector unit and the light-emitter unit correspond to the same field of view in the far field. The light-emitter unit corresponding to the calibrated detector unit is the calibrated light-emitter unit, and the process of calibration (assembly and alignment) is the process of matching of field of view in the far field. The light-emitter unit 211 and the detector unit 221 in the LiDAR shown in Fig. 18 are the calibrated light-emitter unit and the calibrated detector unit of the LiDAR. Accordingly, each of the calibrated light-emitter units includes a plurality of the emitters, and each of the calibrated detector units includes a plurality of the detectors.

In addition, Fig. 18 only shows one column of light-emitter units and one column of detector units. The emitter module and the receiver module of the LiDAR include a plurality of columns of light-emitter units and a plurality of columns of detector units respectively. Moreover, Fig. 18 shows that the number of light-emitter units included in each column of light-emitter units of the emitter module is also greater than 8, and the number of detector units included in each column of detector units is also greater than 8. Accordingly, shown in Fig. 18 is a part of the emitter array and the detector array of the LiDAR.

In addition, in some embodiments of this disclosure, the LiDAR further includes a scanner device (not shown in the figure). The scanner device can deflect the light ray generated by the light-emitter units to a detection angle by rotating or swinging. Specifically, the LiDAR can be a mechanical LiDAR in which a motor drives the emitter-receiver device to rotate as a whole, a rotating mirror LiDAR, or a micro oscillating-mirror LiDAR. Accordingly, the scanner device can be an integral rotation mechanism with a motor, or a rotating mirror or a micro oscillating-mirror.

With continued reference to Fig. 18, the LiDAR further includes an acquisition module 230 for performing acquisition operations and a processor module 240 for processing data.

As shown in Fig. 18, in some embodiments of this disclosure, the acquisition module 230 includes a fixed value acquisition unit 231. The fixed value acquisition unit 231 is configured to perform a fixed value acquisition operation.

The fixed value acquisition unit 231 is configured to perform a fixed value acquisition operation, that is, to perform acquisition, by the plurality of light-emitter units and the plurality of calibrated detector units, to determine the fixed value acquisition data. The performing acquisition by the plurality of light-emitter units and the plurality of calibrated detector units refers to data acquisition achieved by transmitting and receiving optical signals by the light-emitter units and the calibrated detector units.

It is to be noted that the detector unit determined after the LiDAR is calibrated is the calibrated detector unit. In this case, during the fixed value acquisition operation performed by the fixed value acquisition unit 231, the light-emitter unit is a calibrated light-emitter unit.

Specifically, as shown in Fig. 5, the optically sensitive position of the calibrated detector unit 121i of the i-th channel (i.e., the coordinates of the central position is $(x_i, y_i)$). As shown also in Fig. 6, the angle of the field of view corresponding to the calibrated detector unit 121i of the i-th channel is ( $\theta_i = \frac{y_i}{f}, \phi_i = \frac{x_i^{'}}{f}$ ) (shown by the dotted line 602 in Fig. 6), where $\theta_i$ is the angle of the vertical field of view, $\phi$ is the angle of the horizontal field of view, and f is the focal length of the optical system 601. It can be known from Fig. 6 that the receiving field of view corresponds to the central position of the spot, that is, the box 603 is the position corresponding to the calibrated detector unit 121i of the i-th channel.

It is to be noted that in some embodiments of this disclosure, the LiDAR has a scanner device. In this case, after the scanner device determines the detection angle, the fixed value acquisition unit 231 performs a fixed value acquisition operation, and the fixed value acquisition data determined by the fixed value acquisition unit 231 corresponds to the detection angle.

In some embodiments of this disclosure, the acquisition module 230 further includes an interpolation acquisition unit 232 configured to perform an interpolation acquisition operation; the interpolation acquisition unit 232 includes a detector selector 232a and a processor 232b; the detector selector 232a is configured to determine a plurality of interpolated detector units, the plurality of interpolated detector units being in one-to-one correspondence with the plurality of calibrated detector units; and the processor 232b is configured to perform acquisition, by the plurality of light-emitter units and the plurality of interpolated detector units, to determine the interpolation acquisition data.

The detector selector 232a is configured to determine the position of the detector unit that receives the optical signal in the interpolation acquisition operation, thereby expanding the number of channels and improving resolution without additionally increasing the optical-mechanical complexity.

The plurality of interpolated detector units are in one-to-one correspondence with the plurality of calibrated detector units, and the plurality of calibrated detector units (i.e., the detector units 221 in Fig. 18) are in one-to-one correspondence with the plurality of light-emitter units 211 to form physical channels. In this case, the plurality of interpolated detector units are in one-to-one correspondence with the plurality of light-emitter units 211 to form channels in the interpolation acquisition operation. That is, the processor 232b performs the interpolation acquisition operation by the physical channels formed by the plurality of light-emitter units and the plurality of interpolated detector units to determine the interpolation acquisition data. That is, the detection light generated by the light-emitter unit 111i of the i-th channel is reflected by an obstacle outside the LiDAR to form echo light, and the echo light is received by the interpolated detector unit of the i-th channel.

It is to be noted that in some embodiments of this disclosure, the LiDAR has a scanner device. In this case, after the scanner device determines the detection angle, the interpolation acquisition unit 232 performs an interpolation acquisition operation, and the interpolation acquisition data determined by the interpolation acquisition unit 232 corresponds to the detection angle.

In some embodiments of this disclosure, the interpolation acquisition unit 232 is configured to perform a row-column interpolation acquisition operation to determine row-column interpolation acquisition data, the interpolation acquisition data including the row-column interpolation acquisition data; the detector selector 232a includes a row-column selector element 232a1 configured to determine a plurality of row-column interpolated detector units, the direction in which the row-column interpolated detector units point to the corresponding calibrated detector units being parallel to one of the row direction or the column direction of the detector array; and the processor 232b performs acquisition, by the plurality of light-emitter units and the plurality of row-column interpolated detector units, to determine the row-column interpolation acquisition data.

With reference also to Fig. 9, a schematic diagram showing the case where the direction in which the row-column interpolated detector unit points to the corresponding calibrated detector unit is parallel to the row direction of the detector array in the row-column interpolation acquisition operation is shown.

The direction in which the row-column interpolated detector unit 122ix determined by the row-column selector element 232a1 points to the corresponding calibrated detector unit (shown by the dotted line box in Fig. 9) is parallel to the row direction of the detector array. In this case, the row-column interpolated detector unit 122ix is horizontally translated by $\Delta x$ relative to the calibrated detector unit 121i (as shown in Fig. 5). That is, the detector at the corresponding position is powered up or read, and then the angle of the field of view corresponding to the interpolated detector unit 121ix of the i-th

channel is ( $\theta_i, \phi_i + \frac{\Delta x^{'}}{f}$ ).

With reference also to Fig. 10, a schematic diagram showing the case where the direction in which the row-column interpolated detector unit points to the corresponding calibrated detector unit is parallel to the column direction of the detector array in the row-column interpolation acquisition operation is shown.

The direction in which the row-column interpolated detector unit 122iy determined by the row-column selector element 232a1 points to the corresponding calibrated detector unit (shown by the dotted line box in Fig. 10) is parallel to the column direction of the detector array. In this case, the row-column interpolated detector unit 122iy is vertically translated by $\Delta y$ relative to the calibrated detector unit 121i (as shown in Fig. 5). That is, the detector at the corresponding position is powered up or read, and then the angle of the field of view corresponding to the interpolated detector unit 121ix of the i-th channel is

$$\left(\theta_i + \frac{\Delta y}{f},\ \phi_i\right).$$

In some embodiments of this disclosure, the interpolation acquisition unit 232 is further configured to perform an oblique interpolation acquisition operation to determine oblique interpolation acquisition data, the interpolation acquisition data further including the oblique interpolation acquisition data; the detector selector includes an oblique selector element 232a2 configured to determine a plurality of obliquely interpolated detector units, the direction in which the obliquely interpolated detector unit points to the corresponding calibrated detector unit intersecting with both the row direction and the column direction; and the processor 232b performs acquisition, by the plurality of light-emitter units and the plurality of obliquely interpolated detector units, to determine the oblique interpolation acquisition data.

With reference also to Fig. 11, a schematic diagram of the obliquely interpolated detector unit and the corresponding calibrated detector unit in the oblique interpolation acquisition operation is shown.

The direction in which the obliquely interpolated detector unit 122ixy determined by the oblique selector element 232a2 points to the corresponding calibrated detector unit (shown by the dotted box in Fig. 11) intersects with both the row direction and the column direction. Accordingly, the obliquely interpolated detector unit 122ixy is horizontally translated by $\Delta x$ and vertically translated by $\Delta y$ relative to the calibrated detector unit 121i (as shown in Fig. 5). That is, the detector at the corresponding position is powered up or read, and then the angle of the field of view corresponding to the obliquely interpolated detector unit 122ixy of the i-th channel is $\left(\theta_i + \dfrac{\Delta y}{f},\ \ \phi_i + \dfrac{\Delta x}{f}\right)$.

It is to be noted that, as shown in Fig. 5 and Figs. 9 to 11, in some embodiments of this disclosure, along the row direction or the column direction of the detector array, the distance between the interpolated detector unit and the corresponding calibrated detector unit is smaller than the distance between the adjacent calibrated detector units in the corresponding direction.

As shown in Figs. 5 and 9, along the row direction of the detector array, the distance between the row-column interpolated detector unit 122ix and the corresponding calibrated detector unit is smaller than the distance between the adjacent calibrated detector units in the row direction. That is, the row-column interpolated detector unit 122ix is located between the two adjacent calibrated detector units in the row direction.

As shown in Figs. 5 and 10, along the column direction of the detector array, the distance between the row-column interpolated detector unit 122iy and the corresponding calibrated detector unit is smaller than the distance between the adjacent calibrated detector units in the column direction. That is, the row-column interpolated detector unit 122iy is located between the two adjacent calibrated detector units in the column direction.

Specifically, as shown in Figs. 5 and 11, along the row direction of the detector array, the distance between the obliquely interpolated detector unit 122ixy and the corresponding calibrated detector unit is smaller than the distance between the adjacent calibrated detector units in the row direction; that is, the obliquely interpolated detector unit 122ixy is located between the two adjacent calibrated detector units in the row direction; and, along the column direction of the detector array, the distance between the obliquely interpolated detector unit 122ixy and the corresponding calibrated detector unit is smaller than the distance between the adjacent calibrated detector units in the column direction, that is, the obliquely interpolated detector unit 122ixy is located between the two adjacent calibrated detector units in the column direction.

It is also to be noted that in some embodiments of this disclosure, the receiver module of the LiDAR includes a plurality of rows and a plurality of columns of detector units. However, this pattern is only an example. In some embodiments of this disclosure, the receiver module of the LiDAR can also include only one column of detector units or one row of detector units.

In some embodiments of this disclosure, when the receiver module of the LiDAR includes only one column of detector units or one row of detector units, along the row direction or column direction of the detector array, the distance between the interpolated detector unit and the corresponding calibrated detector unit is smaller than the size of the calibrated detector unit in the corresponding direction.

Specifically, when the receiver module of the LiDAR includes only one column of detector units, along the row direction of the detector array, the distance between the interpolated detector unit, including at least one of a row-column interpolation unit and an oblique interpolation unit, and the corresponding calibrated detector unit is smaller than the size of the calibrated detector unit in the row direction. That is, the optically sensitive position (i.e., the central position) of the interpolated detector unit is located within the range of the calibrated detector unit in the row direction.

When the receiver module of the LiDAR includes only one row of detector units, along the column direction of the detector array, the distance between the interpolated detector unit, including at least one of a row-column interpolation unit and an oblique interpolation unit, and the corresponding calibrated detector unit is smaller than the size of the calibrated detector unit in the column direction. That is, the optically sensitive position (i.e., the central position) of the interpolated detector unit is located within the range of the calibrated detector unit in the column direction.

The field of view of the detector unit corresponds to the central position of the spot. When the receiver module of the LiDAR includes a plurality of rows and columns of detector units, the interpolated detector unit is located between the two adjacent calibrated detector units in the corresponding direction. Accordingly, the field of view corresponding to the interpolated detector unit is located between the fields of view corresponding to the two adjacent calibrated detector units in the corresponding direction. Accordingly, the included angle between the field of view corresponding to the interpolated detector unit and the field of view corresponding to the adjacent calibrated detector unit is particularly smaller than the included angle between the fields of view corresponding to the two adjacent calibrated detector units. It can be seen that, by performing the interpolation acquisition operation, the resolution can be effectively improved without increasing the optical-mechanical complexity.

Accordingly, the selector element, including at least one of the row-column selector element 232a1 and the oblique selector element 232a2, can set the distance between the interpolated detector unit and the corresponding calibrated detector unit based on the resolution of the LiDAR. Specifically, in the embodiments shown in Fig. 5 and Figs. 9-10, along the row direction of the detector array, the distance $\Delta x$ between the interpolated detector unit and the corresponding calibrated detector unit is:

$$\frac{\Delta x}{f} = (\phi_{i+1} - \phi_i)/2$$

, and along the column direction of the detector array, the distance $\Delta y$ between the interpolated detector unit and the corresponding calibrated detector unit is:

$$\frac{\Delta y}{f} = (\theta_{i+1} - \theta_i)/2$$

.

The receiver module of the LiDAR can also include only one column of detector units or one row of detector units, and the optically sensitive position (i.e., the central position) of the interpolated detector unit is located within the range in the corresponding direction of the calibrated detector unit. In this case, a part of the field of view corresponding to the interpolated detector unit coincides with the field of view of the calibrated detector unit in the corresponding direction, and the other part extends beyond the calibrated detector unit in the corresponding direction. Accordingly, the included angle between the field of view corresponding to the interpolated detector unit and the field of view corresponding to the adjacent calibrated detector unit is particularly smaller than the range of the included angle between the fields of view corresponding to two adjacent calibrated detector units (assuming the range of angle of the field of view of the two calibrated detector units arranged to be adjacent with each other). It can be seen that, by performing the interpolation acquisition operation, the resolution can be effectively improved without increasing the optical-mechanical complexity.

Accordingly, along at least one direction of the row direction or the column direction of the detector unit, the distance between the interpolated detector unit and the corresponding calibrated detector unit, is determined by the selector element, including at least one of the row-column selector element 232a1 and the oblique selector element 232a2. The distance enables the difference between the angle of the field of view corresponding to the interpolated detector unit and the angle of the field of view corresponding to the corresponding calibrated detector unit to be less than the calibrated resolution of the LiDAR (i.e., the resolution of the LiDAR without the interpolation acquisition operation).

It is also to be noted that in some embodiments of this disclosure, each of the interpolated detector units includes a plurality of detectors, and the plurality of detectors in the interpolated detector unit are partially different from the plurality of detectors in the corresponding calibrated detector unit.

With continued reference to Fig. 18, in some embodiments of this disclosure, the interpolation acquisition unit 232 further includes a light-emitter selector 232c configured to determine a plurality of interpolated light-emitter units based on the plurality of interpolated detector units, the plurality of interpolated light-emitter units being in one-to-one correspondence with the calibrated light-emitter units. The processor 232b performs acquisition, by the plurality of interpolated light-emitter units and the plurality of interpolated detector units, to determine the interpolation acquisition data.

The light-emitter selector 232c determines the interpolated light-emitter units based on the interpolated detector units to enable the central positions of the light-emitter units to be synchronously translated with the detector units during each interpolation acquisition operation to ensure that the receiving field of view of the interpolated light-emitter units corresponds to the spot center of the echo light to ensure the detection efficiency and the distance measurement capability.

As shown in Fig. 12, in the interpolation acquisition operation of performing acquisition by the plurality of interpolated light-emitter units and the plurality of interpolated detector units, the position of the spot of the echo light on the detector array can be translated synchronously with the detector unit, which can ensure distance measurement capability and detection efficiency.

It is to be noted that the LiDAR includes a plurality of emitters, each of the calibrated light-emitter units includes a plurality of the emitters, and each of the interpolated light-emitter units includes a plurality of the emitters; and the plurality of emitters in the interpolated light-emitter unit are partially different from the plurality of emitters in the corresponding calibrated light-emitter unit.

With continued reference to Fig. 18, the LiDAR further includes a processor module 240 that processes data.

Specifically, the processor module 240 determines the point cloud map based on the sum of the fixed value acquisition data determined by the fixed value acquisition operation and the interpolation acquisition data determined by each of the interpolation acquisition operations.

In some embodiments of this disclosure, the LiDAR further includes a scanner device, the fixed value acquisition data corresponds to the detection angle, and the interpolation acquisition data corresponds to the detection angle. In this case, the processor module 240 determines the point cloud map based on the fixed value acquisition data and the interpolation acquisition data at all detection angles.

It is to be noted that for a LiDAR with a scanner device, different acquisition operations can be used at different angles during the scanning process for the same frame, and different acquisition operations can be used during the scanning processes for different frames, and then the results of a plurality of scans are combined to achieve multi-frame stitching, thereby doubling the number of channels and improving the resolution without increasing the optical-mechanical complexity.

With reference to Fig. 13, a schematic diagram of a detector unit using different acquisition operations during scanning processes for different frames in another embodiment of the LiDAR of this disclosure is shown.

It is to be noted that Fig. 13 shows only the schematic positions of 4 detector units in the LiDAR. The number of detector units in the LiDAR is not limited to 4 and can be other numbers. The solid black dot in the figure represents the optically sensitive position (i.e., the central position) of each detector unit. The coordinates marked in the figure are the coordinates of the optically sensitive position of the uppermost detector unit among the 4 detector units in the column shown.

In some embodiments of this disclosure, the LiDAR has a scanner device, and the rotation axis of the scanner device is parallel to the column direction of the detector array. In other embodiments of this disclosure, the rotation axis of the scanner device can also be parallel to the row direction of the detector array, and no limitation is made in this respect in this disclosure.

The scanning process of the scanner device includes a fixed value scanning process. The fixed value scanning process includes: performing, by the fixed value acquisition unit, a fixed value acquisition operation at an $i$-th detection angle; and performing, by the interpolation acquisition unit, a row-column interpolation acquisition operation at an $i+1$th detection angle, the direction in which the row-column interpolated detector unit points to the corresponding calibrated detector unit being parallel to the direction of the rotation axis in the row-column interpolation acquisition operation.

Specifically, the scanning process of the scanner device includes performing a fixed value scanning process in the $n$-th frame. Accordingly, in the $n$-th frame and at the $(m-1)$th detection angle, the fixed value acquisition unit 231 performs a fixed value acquisition operation; and in the $n$-th frame and at the $m$-th detection angle, the interpolation acquisition unit 232 performs a row-column interpolation acquisition operation, the direction in which the row-column interpolated detector unit points to the corresponding calibrated detector unit being parallel to the column direction of the detector array in the row-column interpolation acquisition operation.

As shown in the first row in Fig. 13, in the $n$-th frame and at the $m-1$th detection angle, the 4 detector units are calibrated detector units, where the coordinates of the optically sensitive position of the uppermost detector unit are $(x_i, y_i)$. In the $n$-th frame and at the $m$-th detection angle, the 4 detector units are row-column interpolated detector units, and the connection line between each of the row-column interpolated detector units and the corresponding calibrated detector unit is parallel to the column direction of the detector array, where the coordinates of the optically sensitive position of the uppermost detector unit are $(x_i, y_i + \Delta y)$.

In some embodiments of this disclosure, the scanning process of the scanner device further includes: an interpolation scanning process, the interpolation scanning process being located between two adjacent fixed value scanning processes. The interpolation scanning process includes: performing, by the interpolation acquisition unit, a row-column interpolation acquisition operation at the $i$-th detection angle, the direction in which the row-column interpolated detector unit points to the corresponding calibrated detector unit being perpendicular to the direction of the rotation axis in the row-column interpolation acquisition operation; and performing, by the interpolation acquisition unit, an oblique interpolation acquisition operation at the $i+1$th detection angle.

Specifically, the scanning process of the scanner device includes performing the interpolation scanning process in the $(n+1)$th frame. Accordingly, in the $(n+1)$th frame and at the $(m-1)$th detection angle, the interpolation acquisition unit 232 performs a row-column interpolation acquisition operation, the direction in which the row-column interpolated detector unit points to the corresponding calibrated detector unit being parallel to the row direction of the detector array in the row-column interpolation acquisition operation; and in the $(n+1)$th frame and at the $m$-th detection angle, the interpolation acquisition unit 232 performs an oblique interpolation acquisition operation.

As shown in the second row in Fig. 13, in the $(n+1)$th frame and at the $(m-1)$th detection angle, the 4 detector units are row-column interpolated detector units, and the connection line between each of the row-column interpolated detector units and the corresponding calibrated detector unit is parallel to the row direction of the detector array, where the coordinates of the optically sensitive position of the uppermost detector unit are $(x_i + \Delta x, y_i)$; and in the $(n+1)$th frame and at the $m$-th detection angle, the 4 detector units are obliquely interpolated detector units, where the coordinates of the optically sensitive position of the uppermost detector unit are $(x_i + \Delta x, y_i + \Delta y)$.

Inserting an interpolation scanning process between adjacent fixed value scanning processes enables the row-column interpolated detector unit and the obliquely interpolated detector unit to fill in between the adjacent calibrated detector units, thereby uniformly expanding the number of channels and improving the resolution.

It is to be noted that to reduce the difficulty in detector control and the difficulty in reading of the detector array, the calibrated detector unit and the row-column interpolated detector unit in the fixed value scanning process in the n-th frame and the row-column interpolated detector unit and the obliquely interpolated detector unit in the interpolation scanning process in the (n+1)th frame are enabled to form a regular dot matrix.

Specifically, in some embodiments of this disclosure, along a direction perpendicular to the rotation axis (i.e., the row direction of the detector array), the space between the obliquely interpolated detector unit determined in the oblique interpolation acquisition operation performed by the interpolation acquisition unit 232 and the corresponding calibrated detector unit during the interpolation scanning process in the (n+1)th frame is equal to the space between the row-column interpolated detector unit in the row-column interpolation acquisition operation at the (m-1)th detection angle and the corresponding calibrated detector unit during the interpolation scanning process in the (n+1)th frame. Along a direction parallel to the rotation axis (i.e., the column direction of the detector array), the space between the obliquely interpolated detector unit determined in the oblique interpolation acquisition operation performed by the interpolation acquisition unit 232 and the corresponding calibrated detector unit during the interpolation scanning process in the (n+1)th frame is equal to the space between the row-column interpolated detector unit in the row-column interpolation acquisition operation at the m-th detection angle and the corresponding calibrated detector unit during the fixed value scanning process in the n-th frame.

It is to be noted that in some other embodiments of this disclosure, the traversal of the detectors in the detector array can be realized through the cooperation between different acquisition operations and different scanning processes.

With reference to Fig. 14, a schematic diagram of a detector unit using different acquisition operations during scanning processes for different frames in another embodiment of the LiDAR of this disclosure is shown.

The scanning process of the scanner device includes performing a first fixed value scanning process, a first interpolation scanning process, a second fixed value scanning process, and a second interpolation scanning process; where as shown in the b-th frame in Fig. 14, the first fixed value scanning process includes: performing the fixed value acquisition operation at the (a-1)th detection angle; and performing the row-column interpolation acquisition operation at the a-th detection angle; as shown in the (b+1)th frame in Fig. 18, the first interpolation scanning process includes: performing the row-column interpolation acquisition operation at the (a-1)th detection angle; and performing the oblique interpolation acquisition operation at the a-th detection angle; as shown in the (b+2)th frame in Fig. 16, the second fixed value scanning process includes: performing the row-column interpolation acquisition operation at the (a-1)th detection angle; and performing the fixed value acquisition operation at the a-th detection angle; and as shown in the (b+3)th frame in Fig. 17, the second interpolation scanning process includes: performing the oblique interpolation acquisition operation at the (a-1)th detection angle; and performing the row-column interpolation acquisition operation at the a-th detection angle. The direction in which the row-column interpolated detector unit points to the corresponding calibrated detector unit in the row-column interpolation acquisition operation performed at the (a-1)th detection angle during the second fixed value scanning process is the same as the direction in which the row-column interpolated detector unit points to the corresponding calibrated detector unit in the row-column interpolation acquisition operation performed at the a-th detection angle during the first fixed value scanning process; the direction in which the row-column interpolated detector unit points to the corresponding calibrated detector unit in the row-column interpolation acquisition operation performed at the a-th detection angle during the second interpolation scanning process is the same as the direction in which the row-column interpolated detector unit points to the corresponding calibrated detector unit in the row-column interpolation acquisition operation performed at the (a-1)th detection angle during the first interpolation scanning process; and the direction in which the obliquely interpolated detector unit points to the corresponding calibrated detector unit in the oblique interpolation acquisition operation performed at the (a-1)th detection angle during the second interpolation scanning process is the same as the direction in which the obliquely interpolated detector unit points to the corresponding calibrated detector unit in the oblique interpolation acquisition operation performed at the a-th detection angle during the first interpolation scanning process.

Different scanning processes and different scanning processes in cooperation with different acquisition operations enable the calibrated detector unit and the interpolated detector unit to traverse each detector in the detector array, which can expand the number of channels and improve the resolution to the greatest extent without increasing the optical-mechanical complexity.

To realize the traversal of each detector in the detector array, and to expand the number of channels and improve the resolution as uniformly as possible, the calibrated detector unit and the interpolated detector unit in the first fixed value scanning process, the first interpolation scanning process, the second fixed value scanning process, and the second interpolation scanning process are enabled to form a regular dot matrix. Specifically, the direction in which the row-column interpolated detector unit points to the corresponding calibrated detector unit and the distance between them in the row-column interpolation acquisition operation performed at the (a-1)th detection angle during the second fixed value scanning process are the same as the direction in which the row-column interpolated detector unit points to the corresponding calibrated detector unit and the distance between them in the row-column interpolation acquisition operation performed at the a-th detection angle during the first fixed value scanning process; the direction in which the row-column interpolated detector unit points to the corresponding calibrated detector unit and the distance between them in the row-column interpolation acquisition operation performed at the a-th detection angle during the second interpolation scanning process are the same as the direction in which the row-column interpolated detector unit points to the corresponding calibrated detector unit and the distance between them in the row-column interpolation acquisition operation performed at the (a-1)th detection angle during the first interpolation scanning process; and the direction in which the obliquely interpolated detector unit points to the corresponding calibrated detector unit and the distance between them in the oblique interpolation acquisition operation performed at the (a-1)th detection angle during the second interpolation scanning process are the same as the direction in which the obliquely interpolated detector unit points to the corresponding calibrated detector unit and the distance between them in the oblique interpolation acquisition operation performed at the a-th detection angle during the first interpolation scanning process.

Although this disclosure is disclosed as above, this disclosure is not limited thereto. Any person skilled in the art can make various changes and modifications without departing from the spirit and scope of this disclosure, and therefore the scope of protection of this disclosure shall be subject to the scope limited by the claims.

**Claims**

1. A detection method for a LiDAR, wherein the LiDAR comprises a plurality of light-emitter units and a plurality of calibrated detector units, the plurality of calibrated detector units being in one-to-one correspondence with the plurality of light-emitter units; the detection method comprising:

   performing a fixed value acquisition operation to determine fixed value acquisition data, the fixed value acquisition operation comprising performing acquisition, by the plurality of light-emitter units and the plurality of calibrated detector units, to determine the fixed value acquisition data;
   performing at least one interpolation acquisition operation to determine interpolation acquisition data; and
determining the point cloud map based on the fixed value acquisition data and the interpolation acquisition data.

2. The detection method of claim 1, wherein the interpolation acquisition operation comprises:

   determining a plurality of interpolated detector units, the plurality of interpolated detector units being in one-to-one correspondence with the plurality of calibrated detector units; and
   performing acquisition, by the plurality of light-emitter units and the plurality of interpolated detector units, to determine the interpolation acquisition data.

3. The detection method of claim 2, wherein each of the calibrated detector units comprises a plurality of detectors, and each of the interpolated detector units comprises a plurality of detectors; and
   the plurality of detectors in the interpolated detector unit are partially different from the plurality of detectors in the corresponding calibrated detector unit.

4. The detection method of claim 3, wherein the LiDAR comprises: a plurality of detectors arranged in an array to form a detector array; and

   along a row direction or a column direction of the detector array, a distance between the interpolated detector unit and the corresponding calibrated detector unit is smaller than a distance between the adjacent calibrated detector units in the corresponding direction;
   or, along the row direction or the column direction of the detector array, the distance between the interpolated detector unit and the corresponding calibrated detector unit is smaller than the size of the calibrated detector unit in the corresponding direction.

5. The detection method of claim 4, wherein the step of performing at least one interpolation acquisition operation to determine the interpolation acquisition data comprises: performing a row-column interpolation acquisition operation to determine the row-column interpolation acquisition data, the interpolation acquisition data comprising the row-column interpolation acquisition data;
   wherein the row-column interpolation acquisition operation comprises: determining a plurality of row-column interpolated detector units, the direction in which the row-column interpolated detector unit points to the corresponding calibrated detector unit being parallel to one of the row direction or the column direction of the detector array; and performing acquisition, by the plurality of light-emitter units and the plurality of row-column interpolated detector units, to determine the row-column interpolation acquisition data.

6. The detection method of claim 4, wherein the step of performing at least one interpolation acquisition operation to determine the interpolation acquisition data further comprises: performing an oblique interpolation acquisition operation to determine the oblique interpolation acquisition data, the interpolation acquisition data further comprising the oblique interpolation acquisition data;

wherein the oblique interpolation acquisition operation comprises: determining a plurality of obliquely interpolated detector units, the direction in which the obliquely interpolated detector unit points to the corresponding calibrated detector unit intersecting with both the row direction and the column direction; and performing acquisition, by the plurality of light-emitter units and the plurality of obliquely interpolated detector units, to determine the oblique interpolation acquisition data.

7. The detection method of claim 3 or 4, wherein the detector is an independently addressed and independently controlled detector.

8. The detection method of claim 2, wherein in the step of performing acquisition, by the plurality of light-emitter units and the plurality of calibrated detector units, to determine the fixed value acquisition data, the light-emitter units are the calibrated light-emitter units; and
the step of interpolation acquisition operation further comprises:

determining a plurality of interpolated light-emitter units based on the plurality of interpolated detector units, the plurality of interpolated light-emitter units being in one-to-one correspondence with the calibrated light-emitter units; and performing acquisition, by the plurality of interpolated light-emitter units and the plurality of interpolated detector units, to determine the interpolation acquisition data.

9. The detection method of claim 8, wherein each of the calibrated light-emitter units comprises a plurality of emitters, and each of the interpolated light-emitter units comprises a plurality of emitters; and
the plurality of emitters in the interpolated light-emitter unit are partially different from the plurality of emitters in the corresponding calibrated light-emitter unit.

10. The detection method of claim 9, wherein the emitter is an independently addressed and independently controlled emitter.

11. The detection method of claim 2, wherein the LiDAR further comprises a scanner device configured to deflect a light ray generated by the light-emitter units to a detection angle by rotating or swinging;

the fixed value acquisition operation further comprises, before performing acquisition, by the plurality of light-emitter units and the plurality of calibrated detector units, to determine the fixed value acquisition data, determining a detection angle, the fixed value acquisition data corresponding to the detection angle; and
the interpolation acquisition operation further comprises: before performing acquisition, by the plurality of light-emitter units and the plurality of interpolated detector units, to determine the interpolation acquisition data, determining a detection angle, the interpolation acquisition data corresponding to the detection angle.

12. The detection method of claim 11, wherein the rotation axis is parallel to one of the row direction or the column direction of the detector array; and
the detection method comprises: a fixed value scanning process, the fixed value scanning process comprising:

performing the fixed value acquisition operation at an i-th detection angle; and
performing a row-column interpolation acquisition operation at an i+1th detection angle, the direction in which the row-column interpolated detector unit points to the corresponding calibrated detector unit being parallel to the rotation axis in the row-column interpolation acquisition operation.

13. The detection method of claim 11 or 12, wherein the detection method further comprises: at least one interpolation scanning process, the interpolation scanning process being located between the two adjacent fixed value scanning processes; and
the interpolation scanning operation comprises:

performing the row-column interpolation acquisition operation at the i-th detection angle, the direction in which the row-column interpolated detector unit points to the corresponding calibrated detector unit being perpendicular to the direction of the rotation axis in the row-column interpolation acquisition operation; and
performing the oblique interpolation acquisition operation at the i+1th detection angle.

14. The detection method of claim 11, comprising: performing a first fixed value scanning process, a first interpolation scanning process, a second fixed value scanning process, and a second interpolation scanning process;

wherein,

the first fixed value scanning process comprises: performing the fixed value acquisition operation at the i-th detection angle; and performing the row-column interpolation acquisition operation at the i+1th detection angle;

the first interpolation scanning process comprises: performing the row-column interpolation acquisition operation at the i-th detection angle; and performing the oblique interpolation acquisition operation at the i+1th detection angle;

the second fixed value scanning process comprises: performing the row-column interpolation acquisition operation at the i-th detection angle; and performing the fixed value acquisition operation at the i+1th detection angle;

the second interpolation scanning process comprises: performing the oblique interpolation acquisition operation at the i-th detection angle; and performing the row-column interpolation acquisition operation at the i+1th detection angle;

and the direction in which the row-column interpolated detector unit points to the corresponding calibrated detector unit in the row-column interpolation acquisition operation performed at the i-th detection angle during the second fixed value scanning process is the same as the direction in which the row-column interpolated detector unit points to the corresponding calibrated detector unit in the row-column interpolation acquisition operation performed at the i+1th detection angle during the first fixed value scanning process;

the direction in which the row-column interpolated detector unit points to the corresponding calibrated detector unit in the row-column interpolation acquisition operation performed at the i+1th detection angle during the second interpolation scanning process is the same as the direction in which the row-column interpolated detector unit points to the corresponding calibrated detector unit in the row-column interpolation acquisition operation performed at the i-th detection angle during the first interpolation scanning process; and

the direction in which the obliquely interpolated detector unit points to the corresponding calibrated detector unit in the oblique interpolation acquisition operation performed at the i-th detection angle during the second interpolation scanning process is the same as the direction in which the obliquely interpolated detector unit points to the corresponding calibrated detector unit in the oblique interpolation acquisition operation performed at the i+1th detection angle during the first interpolation scanning process.

15. A LiDAR, comprising:

a plurality of light-emitter units and a plurality of calibrated detector units, the plurality of calibrated detector units being in one-to-one correspondence with the plurality of light-emitter units; and

a detection processor device configured to implement the detection method of any one of claims 1 to 14.

16. A LiDAR, comprising:

a plurality of light-emitter units and a plurality of calibrated detector units, the plurality of calibrated detector units being in one-to-one correspondence with the plurality of light-emitter units; and

an acquisition module configured to perform a fixed value acquisition operation to determine fixed value acquisition data, the fixed value acquisition operation comprising performing acquisition, by the plurality of light-emitter units and the plurality of calibrated detector units, to determine the fixed value acquisition data; and further configured to perform at least one interpolation acquisition operation to determine interpolation acquisition data; and

a processor module configured to determine the point cloud map based on the fixed value acquisition data and the interpolation acquisition data.

17. The LiDAR of claim 16, wherein the acquisition module comprises: a fixed value acquisition unit and an interpolation acquisition unit, the fixed value acquisition unit configured to perform the fixed value acquisition operation, and the interpolation acquisition unit configured to perform the interpolation acquisition operation; and the interpolation acquisition unit comprises: a detector selector and a processor;

the detector selector configured to determine a plurality of interpolated detector units, the plurality of interpolated detector units being in one-to-one correspondence with the plurality of calibrated detector units; and

the processor configured to perform acquisition, by the plurality of light-emitter units and the plurality of interpolated detector units, to determine the interpolation acquisition data.

18. The LiDAR of claim 17, wherein,

each of the calibrated detector units comprises a plurality of detectors, and each of the interpolated detector units comprises a plurality of detectors; and

the plurality of detectors in the interpolated detector unit are partially different from the plurality of detectors in the corresponding calibrated detector unit.

19. The LiDAR of claim 18, comprising: a plurality of detectors arranged in an array to form a detector array; and

   along a row direction or a column direction of the detector array, a distance between the interpolated detector unit and the corresponding calibrated detector unit is smaller than a distance between the adjacent calibrated detector units in the corresponding direction;
   or, along the row direction or the column direction of the detector array, the distance between the interpolated detector unit and the corresponding calibrated detector unit is smaller than the size of the calibrated detector unit in the corresponding direction.

20. The LiDAR of claim 19, wherein the interpolation acquisition unit is configured to perform a row-column interpolation acquisition operation to determine the row-column interpolation acquisition data, the interpolation acquisition data comprising the row-column interpolation acquisition data;

   the detector selector comprises: a row-column selector element configured to determine a plurality of row-column interpolated detector units, the direction in which the row-column interpolated detector unit points to the corresponding calibrated detector units being parallel to one of the row direction or the column direction of the detector array; and
   the processor performs acquisition, by the plurality of light-emitter units and the plurality of row-column interpolated detector units, to determine the row-column interpolation acquisition data.

21. The LiDAR of claim 19, wherein the interpolation acquisition unit is configured to perform an oblique interpolation acquisition operation to determine oblique interpolation acquisition data, the interpolation acquisition data further comprising the oblique interpolation acquisition data;

   the detector selector comprises: an oblique selector element configured to determine a plurality of obliquely interpolated detector units, the direction in which the obliquely interpolated detector units point to the corresponding calibrated detector units intersecting with both the row direction and the column direction; and
   the processor performs acquisition, by the plurality of light-emitter units and the plurality of obliquely interpolated detector units, to determine the oblique interpolation acquisition data.

22. The LiDAR of claim 18 or 19, wherein the detector comprises: a single photon avalanche diode.

23. The LiDAR of claim 17, wherein the light-emitter units used in the process of performing the fixed value acquisition operation by the fixed value acquisition unit are calibrated light-emitter units;

   the interpolation acquisition unit further comprises: a light-emitter selector configured to determine a plurality of interpolated light-emitter units based on the plurality of interpolated detector units, the plurality of interpolated light-emitter units being in one-to-one correspondence with the calibrated light-emitter units; and
   the processor performs acquisition, by the plurality of interpolated light-emitter units and the plurality of interpolated detector units, to determine the interpolation acquisition data.

24. The LiDAR of claim 23, wherein,

   each of the calibrated light-emitter units comprises a plurality of emitters, and each of the interpolated light-emitter units comprises a plurality of emitters; and
   the plurality of emitters in the interpolated light-emitter unit are partially different from the plurality of emitters in the corresponding calibrated light-emitter unit.

25. The LiDAR of claim 24, wherein the emitter comprises: a vertical cavity surface emitting emitter.

26. The LiDAR of claim 17, further comprising: a scanner device configured to deflect a light ray generated by the light-emitter units around the rotation axis to a detection angle by rotating or swinging;

   wherein the fixed value acquisition unit is further configured to determine the detection angle, the fixed value acquisition data corresponding to the detection angle; and
   the interpolation acquisition unit is further configured to determine the detection angle, the interpolation acquisition data corresponding to the detection angle.

27. The LiDAR of claim 26, wherein the rotation axis is parallel to one of the row direction or the column direction of the detector array;

   the scanning process of the scanner device comprises: a fixed value scanning process; and the fixed value scanning process comprises:

performing, by the fixed value acquisition unit, the fixed value acquisition operation at an i-th detection angle; and

performing, by the interpolation acquisition unit, a row-column interpolation acquisition operation at an i+1th detection angle, the direction in which the row-column interpolated detector unit points to the corresponding calibrated detector unit being parallel to the direction of the rotation axis in the row-column interpolation acquisition operation.

28. The LiDAR of claim 27, wherein the scanning process of the scanner device further comprises: an interpolation scanning process, the interpolation scanning process being located between the two adjacent fixed value scanning processes; and the interpolation scanning process comprises:

performing, by the interpolation acquisition unit, the row-column interpolation acquisition operation at the i-th detection angle, the direction in which the row-column interpolated detector unit points to the corresponding calibrated detector unit being perpendicular to the direction of the rotation axis in the row-column interpolation acquisition operation; and

performing, by the interpolation acquisition unit, the oblique interpolation acquisition operation at the i+1th detection angle.

29. The LiDAR of claim 26, wherein the scanning process of the scanner device comprises: performing a first fixed value scanning process, a first interpolation scanning process, a second fixed value scanning process, and a second interpolation scanning process;

wherein the first fixed value scanning process comprises: performing, by the fixed value acquisition unit, the fixed value acquisition operation at the i-th detection angle; and performing, by the interpolation acquisition unit, the row-column interpolation acquisition operation at the i+1th detection angle;

the first interpolation scanning process comprises: performing, by the interpolation acquisition unit, the row-column interpolation acquisition operation at the i-th detection angle; and performing, by the interpolation acquisition unit, the oblique interpolation acquisition operation at the i+1th detection angle;

the second fixed value scanning process comprises: performing, by the interpolation acquisition unit, the row-column interpolation acquisition operation at the i-th detection angle; and performing, by the fixed value acquisition unit, the fixed value acquisition operation at the i+1th detection angle;

the second interpolation scanning process comprises: performing, by the interpolation acquisition unit, the oblique interpolation acquisition operation at the i-th detection angle; and performing, by the interpolation acquisition unit, the row-column interpolation acquisition operation at the i+1th detection angle;

and the direction in which the row-column interpolated detector unit points to the corresponding calibrated detector unit in the row-column interpolation acquisition operation performed at the i-th detection angle during the second fixed value scanning process is the same as the direction in which the row-column interpolated detector unit points to the corresponding calibrated detector unit in the row-column interpolation acquisition operation performed at the i+1th detection angle during the first fixed value scanning process;

the direction in which the row-column interpolated detector unit points to the corresponding calibrated detector unit in the row-column interpolation acquisition operation performed at the i+1th detection angle during the second interpolation scanning process is the same as the direction in which the row-column interpolated detector unit points to the corresponding calibrated detector unit in the row-column interpolation acquisition operation performed at the i-th detection angle during the first interpolation scanning process; and the direction in which the obliquely interpolated detector unit points to the corresponding calibrated detector unit in the oblique interpolation acquisition operation performed at the i-th detection angle during the second interpolation scanning process is the same as the direction in which the obliquely interpolated detector unit points to the corresponding calibrated detector unit in the oblique interpolation acquisition operation performed at the i+1th detection angle during the first interpolation scanning process.

111

121

111v    121s

111i    121i

110    120

111(i+1)

121(i+1)

130

Detection processor
device

**FIG. 1**

1213

**FIG. 2**

FIG. 3

S110

Perform fixed value acquisition operation to determine fixed value acquisition data, fixed value acquisition operation including performing acquisition, by plurality of light-emitter units and plurality of calibrated detector units, to determine fixed value acquisition data

S120

Perform at least one interpolation acquisition operation to determine interpolation acquisition data

S130

Determine point cloud map based on fixed value acquisition data and interpolation acquisition data

**FIG. 4**

$(x_{i-1},y_{i-1})$

$(x_i,y_i)$

$(x_{i+1},y_{i+1})$

120

121(i-1)

121i

121(i+1)

121s

**FIG. 5**

**FIG. 6**

**FIG. 7**

S120xy

S121xy

Perform row-column interpolation acquisition operation to determine row-column interpolation acquisition data

Determine plurality of row-column interpolated detector units

S122xy

Perform acquisition, by plurality of light-emitter units and plurality of row-column interpolated detector units

Perform at least one interpolation acquisition operation to determine interpolation acquisition data

S120d

S121d

Perform oblique interpolation acquisition operation to determine oblique interpolation acquisition data

Determine plurality of obliquely interpolated detector units

S122d

Perform acquisition, by plurality of light-emitter units and plurality of obliquely interpolated detector units

## FIG. 8

## FIG. 9

**FIG. 10**

**FIG. 11**

**FIG. 12**

**FIG. 13**

**FIG. 14**

**FIG. 15**

a-1

a

$(x_i, y_i + \Delta y)$

$(x_i, y_i)$

b+2

**FIG. 16**

a-1

a

$(x_i + \Delta x, y_i + \Delta y)$

$(x_i + \Delta x, y_i)$

b+3

**FIG. 17**

**FIG. 18**

## INTERNATIONAL SEARCH REPORT

| International application No. |
|---|
| **PCT/CN2022/098784** |

**A.    CLASSIFICATION OF SUBJECT MATTER**

G01S 7/483(2006.01)i;   G01S 17/89(2020.01)i;   G01S 17/93(2020.01)i

According to International Patent Classification (IPC) or to both national classification and IPC

**B.    FIELDS SEARCHED**

Minimum documentation searched (classification system followed by classification symbols)

G01S

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; IEEE: 激光, 探测, 插值, 定值, 探测, 发光, 数据, 雷达, 点云, 发射, 标定, laser radar, point, cloud, receiver, interpolate, transmit, calibration

**C.    DOCUMENTS CONSIDERED TO BE RELEVANT**

| Category* | Citation of document, with indication, where appropriate, of the relevant passages | Relevant to claim No. |
|---|---|---|
| Y | CN 212905427 U (BEIJING YINTAILI TECHNOLOGY CO., LTD.) 06 April 2021 (2021-04-06)<br>    description, paragraphs [0004]-[0045] | 1, 15, 16 |
| Y | CN 110879401 A (NANJING UNIVERSITY OF SCIENCE AND TECHNOLOGY) 13 March 2020 (2020-03-13)<br>    description, paragraphs [0031]-[0050] | 1, 15, 16 |
| A | CN 112313534 A (SZ DJI TECHNOLOGY CO., LTD.) 02 February 2021 (2021-02-02)<br>    entire document | 1-29 |
| A | US 2018284274 A1 (LUMINAR TECHNOLOGIES, INC.) 04 October 2018 (2018-10-04)<br>    entire document | 1-29 |

☐ Further documents are listed in the continuation of Box C.        ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **28 August 2022** | **20 September 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/098784**

| Patent document cited in search report | | | Publication date (day/month/year) | Patent family member(s) | | | Publication date (day/month/year) |
|---|---|---|---|---|---|---|---|
| CN | 212905427 | U | 06 April 2021 | None | | | |
| CN | 110879401 | A | 13 March 2020 | None | | | |
| CN | 112313534 | A | 02 February 2021 | WO | 2020237663 | A1 | 03 December 2020 |
| US | 2018284274 | A1 | 04 October 2018 | US | 10094925 | B1 | 09 October 2018 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111630295